# DEMANDE DE BREVET EUROPEEN

(11) **EP 1 786 224 A1**
(43) Date de publication de la demande: **16.05.2007**
(21) Numéro de dépôt: 06291761.2
(22) Date de dépôt: 14.11.2006
(51) Int. Cl.: H04Q 7/36

(54) **Procédé et système de simulation et de gestion des ressources d'un réseau de téléphonie mobile**

(30) Priorité: 14.11.2005 FR 0511509
(71) Demandeur: Societé Française du Radiotéléphone, 75008 Paris (FR)
(72) Inventeur: Barbosa Da Torre, Serge, 75020 Paris (FR); Chrabieh, Rabih, San Diego, CA 92109 (US); Fattouch, Imad, 75013 Paris (FR)
(74) Mandataire: Debay, Yves

(57) **Abrégé**

La présente invention concerne un procédé et un système de simulation et d'optimisation de l'exploitation des ressources disponibles dans une zone de couverture d'un réseau (RT) de téléphonie mobile, caractérisé, d'une part, en ce qu'il est mis en oeuvre par des moyens (10) de traitement d'au moins un système (1) d'optimisation de ressources et, d'autre part, en ce qu'il comporte les étapes suivantes :
- définition (50), par un module (EM) gestionnaire d'évènements du système (1) d'optimisation, d'une variation, dite perturbation, d'au moins une transmission (T) de paquet (P) requise au sein du réseau (RT), à partir d'au moins une carte (CR) de répartition statistique stockée dans des moyens (11) de mémorisation du système (1) d'optimisation et comportant des données représentatives de transmissions (T) de paquets (P) de données,
- sélection (52) d'un ensemble de cellules définissant une zone simulée (ZS), par un module (CL) de contrôle d'exploitation des ressources, puis utilisation d'un algorithme de parcours pour définir un chemin de parcours (CP) de la zone simulée (ZS) et optimiser successivement les ressources des serveurs (ER) couvrant les cellules successives du chemin de parcours (CP).

## Description

La présente invention concerne le domaine de la téléphonie mobile et en particulier les réseaux de téléphonie mobile de troisième génération (3G) tels que, par exemple, les systèmes de communication du type UMTS (« Universal Mobile Telecommunications System », selon la terminologie anglaise) défini par le standard 3GPP («Third Generation Partnership Project», selon la terminologie anglaise).

Un problème dans le domaine de la téléphonie mobile en général est la gestion des ressources radio (en anglais « Radio Resources Management » RRM) en fonction de la topologie des réseaux et de leur utilisation par les abonnés. Les réseaux de téléphonie mobile nécessitent en effet une gestion des ressources radio utilisées, au moins dans le sens descendant (« downlink », selon la terminologie anglaise), c'est-à-dire des émetteurs vers les terminaux mobiles communicants présents dans leur zone d'influence. Ce problème se complexifie avec le développement des nouvelles technologies de télécommunication et notamment avec l'arrivée des systèmes de troisième génération offrant la possibilité aux abonnés d'utiliser leurs terminaux mobiles communicants comme des terminaux de navigation sur Internet, avec une bande passante de l'ordre du mégaoctet par seconde. Dans ces systèmes, les taux de transmission au sein d'une cellule du réseau varient énormément et rapidement en fonction de l'utilisation des différents services par les utilisateurs. Il est donc important de permettre une gestion dynamique efficace du débit de données transitant par les émetteurs pour les différents terminaux mobiles communicants présents dans leur zone d'influence et de surveiller la qualité des services fournis.

Dans les systèmes de téléphonie mobile de la génération du GSM (« Global System for Mobile communication », selon la terminologie anglaise), les données transmises par fréquences radio sont organisées selon des trames de données divisées en une pluralité d'intervalles de temps permettant à autant d'utilisateurs d'utiliser une même fréquence pour leur communication grâce à leur terminal mobile communicant. Cette division des trames de données est appelée « accès multiple par division du temps » (« Time Division Multiple Access », TDMA, selon la terminologie anglaise).

Dans les systèmes de troisième génération, les données peuvent être transmises grâce à différents codages qui permettent à une pluralité de terminaux mobiles communicants d'utiliser une même fréquence radio mais avec des codes différents. Cette technologie est appelée « accès multiple par division du code » (« Code Division Multiple Access », CDMA, selon la terminologie anglaise). Les réseaux de téléphonie moderne peuvent utiliser les deux types de division des fréquences radio pour la transmission des données. Par exemple, les systèmes de type UMTS-TDD (pour l'anglais « Universal Mobile Telecommunications System - Time Division Duplex ») utilisent la technologie TD-CDMA (pour l'anglais « Time Division - Code Division Multiple Access »). Certaines évolutions de l'UMTS comme les Technologies WCDMA (pour l'anglais « Wide-Band Code Division Multiple Access ») et HSDPA (pour l'anglais « High Speed Downlink Packet Access ») permettent d'atteindre des bandes passantes élevées pour la transmission des données, au moins dans le sens descendant (« Downlink »). Les réseaux de téléphonie mobile moderne utilisent la technologie de l'aiguillage (PS) par paquets (« packet switch », selon la terminologie anglaise), utilisée pour Internet et selon laquelle les données sont transmises par paquets définis par un ensemble de données transitant en même temps et dont certaines données correspondent à un entête (« header », selon la terminologie anglaise) permettant l'aiguillage et donc l'adressage du paquet vers sa cible au travers du réseau, par exemple de type GPRS (« General Packet Radio Service », selon la terminologie anglaise). Les réseaux de téléphonie mobile utilisent également la technologie de l'aiguillage par circuit (« circuit switch », selon la terminologie anglaise) pour le transit des données correspondant aux informations sonores nécessaires aux communications téléphoniques au travers du réseau. La gestion des ressources des réseaux de téléphonie mobile moderne doit donc non seulement intégrer une gestion de la division dans le temps des trames de transmission de données mais également de la division par le codage, ainsi que du type d'aiguillage (« packet switch » ou « circuit switch », c'est-à-dire par paquets ou par circuit) utilisé pour le transit des paquets au sein du réseau.

Enfin, les réseaux de téléphonie mobile moderne nécessitent une gestion de la puissance des émetteurs en fonction du nombre de terminaux mobiles communicants d'utilisateurs présents dans leur zone d'influence et en fonction de la distance séparant ces terminaux des émetteurs, mais également en fonction de l'utilisation des différents types de services, plus ou moins coûteux en ressources, offerts par les opérateurs téléphoniques aux utilisateurs de terminaux mobiles communicants.

II est connu dans l'art antérieur des solutions permettant une prévision statistique du trafic au sein d'un réseau, par exemple grâce à la méthode de « Monte Carlo », mais ces solutions de simulations statiques ne rendent pas compte de l'aspect temporellement dynamique des communications passées au sein du réseau puisqu'elles reposent sur des itérations d'estimations statistiques du trafic à différents temps. Ces solutions ne permettent pas de « contrôle d'admission des appels » (CAC, pour l'anglais « Call Admission Control »), c'est-à-dire de contrôler l'admission ou le rejet des appels en fonction de l'utilisation des ressources des émetteurs. De plus, ces solutions ne permettent pas non plus de « contrôle de charge » (LC, pour l'anglais « Load Control »), c'est-à-dire de contrôler l'utilisation des trames de voie de support (B) disponibles pour les communications au sein d'une cellule couverte par un émetteur. Enfin, ces solutions ne permettent pas de contrôle du débit offert aux différents utilisateurs de terminaux communicants présents dans une cellule couverte par un émetteur du réseau.

II est également connu dans l'art antérieur des solutions consistant en une simulation dynamique des communications au sein d'un réseau de téléphonie mobile. Ces solutions présentent l'avantage de simuler la réalité mais présentent les inconvénients d'être limitées à un ensemble de 30 ou 40 cellules car elles nécessitent de nombreux paramètres et donc énormément de ressources de calcul. Ces solutions sont donc trop lourdes à implémenter et inexploitables dans un réseau opérationnel.

Il est également connu, notamment par la demande de brevet EP 1 427 233 A1, des solutions consistant en une simulation du réseau dans lequel sont identifiés les stations de base et les terminaux mobiles communicants générant des interférences affectant une communication considérée. Ces solutions présentent les inconvénients de démarrer à partir d'un état instable du réseau à un instant donné car elles consistent à rechercher des éventuelles interférences affectant une communication considérée d'un terminal mobile communicant et générées par des communications passées dans un nombre restreint de cellules autour de ce terminal. Ce type de solution présente les inconvénients de ne pas prendre en compte les interférences générées par la communication considérée sur les autres communications et de ne pas permettre directement une optimisation du réseau grâce à une re-convergence efficace du réseau vers un état stable.

La présente invention a pour but de supprimer les inconvénients de l'art antérieur en proposant une méthode de simulation et d'optimisation de l'exploitation des ressources d'un réseau de téléphonie mobile nécessitant de moindres capacités de calcul pour son implémentation et permettant un contrôle dynamique, en fonction du trafic, de l'ensemble des ressources du réseau et de l'utilisation des différents types de services offerts aux utilisateurs de terminaux communicants présents dans la zone de couverture du réseau, ainsi qu'une surveillance de la qualité des prestations offertes.

Ce but est atteint par un procédé de simulation et d'optimisation de l'exploitation des ressources disponibles dans une zone de couverture d'un réseau de téléphonie mobile consistant en un ensemble de zones d'influence, dites cellules, d'une pluralité d'émetteurs/récepteurs, dits serveurs, dont l'exploitation des ressources dépend des transmissions d'ensembles de données, dits paquets, requises par au moins un terminal mobile communicant, dit requérant, présent dans leur zone d'influence, caractérisé, d'une part, en ce qu'il est mis en oeuvre par des moyens de traitement d'au moins un système d'optimisation de ressources et, d'autre part, en ce qu'il comporte les étapes suivantes :
- définition, par un module gestionnaire d'évènements du système d'optimisation, d'une variation, dite perturbation, d'au moins une transmission de paquet requise au sein du réseau, la perturbation étant définie à partir d'au moins une carte de répartition statistique stockée dans des moyens de mémorisation du système d'optimisation et comportant des données représentatives de transmissions de paquets de données d'une pluralité de terminaux mobiles communicants présents dans une zone géographique déterminée pendant une tranche horaire déterminée,
- sélection d'un ensemble de cellules comportant au moins la cellule dans laquelle la perturbation a lieu et définissant une zone simulée au sein de la carte de répartition, par un module de contrôle d'exploitation des ressources, puis utilisation d'un algorithme de parcours, par le module de contrôle d'exploitation, pour définir un chemin de parcours de la zone simulée et optimiser successivement les ressources des serveurs couvrant les cellules successives du chemin de parcours.

Selon une autre particularité, le procédé comporte une étape préalable d'établissement d'au moins une carte de répartition comportant des données représentatives du trafic et de la localisation des serveurs dans la zone de couverture du réseau, ces données représentatives du trafic correspondant à des mesures quantitatives et qualitatives de la localisation d'une pluralité de terminaux mobiles communicants et de serveurs opérant dans la zone de couverture du réseau et des transmissions de paquets de données effectuées au cours de tranches horaires choisies pour leur significativité statistique, les données correspondant à ces mesures étant enregistrées dans les moyens de mémorisation du système d'optimisation.

Selon une autre particularité, le procédé comporte une étape d'établissement d'au moins une carte de répartition comportant des données représentatives du trafic et de la localisation des serveurs dans la zone de couverture du réseau, les données représentatives du trafic étant générées par le module gestionnaire d'évènements et représentant, d'une part, la localisation d'une pluralité de terminaux mobiles communicants distribués aléatoirement dans la zone de couverture du réseau selon une densité prédéterminée et, d'autre part, les transmissions de paquets de données requises par ces terminaux assignées aléatoirement aux différents terminaux présents dans le réseau, à partir de lois aléatoires stockées dans les moyens de mémorisation du système d'optimisation.

Selon une autre particularité, le procédé comporte une étape d'enregistrement dans les moyens de mémorisation du système d'optimisation d'au moins un algorithme de parcours permettant au module de contrôle d'exploitation de définir un chemin de parcours consistant en une sélection d'une cellule quelconque de la zone simulée puis en une pluralité d'itérations d'une sélection d'une cellule adjacente à la cellule sélectionnée précédemment, jusqu'à ce que toutes les cellules de la zone simulée aient été successivement sélectionnées dans un ordre croissant en fonction de leur distance par rapport à la première cellule sélectionnée.

Selon une autre particularité, le procédé comporte une étape d'enregistrement dans les moyens de mémorisation du système d'optimisation d'au moins un algorithme de parcours définissant des cercles concentriques centrés autour de la cellule dans laquelle a lieu la perturbation et permettant au module de contrôle d'exploitation de définir un chemin de parcours consistant en des sélections successives des cellules de la zone simulée par lesquelles passent ces cercles concentriques dans un ordre croissant en fonction de la distance de ces cellules par rapport à la première cellule sélectionnée.

Selon une autre particularité, l'étape d'utilisation de l'algorithme de parcours par le module de contrôle d'exploitation s'accompagne d'une étape de création de données représentatives d'une grille de découpage de la zone simulée en divisions comportant chacune un index obtenu à partir des coordonnées des cellules et permettant de localiser chacune des divisions et de les classer dans un ordre croissant en fonction de leur distance par rapport à une division centrale.

Selon une autre particularité, l'étape d'utilisation, par le module de contrôle d'exploitation, d'un algorithme de parcours résulte en une définition de cercles concentriques centrés autour de la cellule dans laquelle a lieu la perturbation et s'accompagne d'une étape de définition d'un chemin de parcours comportant au moins un vecteur indiquant le trajet à parcourir d'une division à l'autre au sein de la zone simulée, pour permettre des sélections successives des divisions de la zone simulée par lesquelles passent ces cercles concentriques et des sélections successives des cellules contenues dans chacune de ces divisions dans un ordre croissant en fonction de leur distance par rapport à une division centrale.

Selon une autre particularité, les données représentatives de la grille de découpage de la zone simulée en divisions comportent des données représentatives des coordonnées de la division permettant au module de contrôle d'exploitation de déterminer la localisation des cellules ainsi que des divisions et cellules voisines.

Selon une autre particularité, l'étape d'utilisation de l'algorithme de parcours par le module de contrôle d'exploitation s'accompagne d'une étape de création, pour chaque cellule de la zone simulée, de données représentatives des cellules voisines dans la zone simulée, de façon à définir un chemin de parcours de chacune des cellules les unes après les autres.

Selon une autre particularité, le chemin de parcours des cellules au sein d'une division est déterminé de façon aléatoire.

Selon une autre particularité, l'étape d'utilisation de l'algorithme de parcours par le module de contrôle d'exploitation s'accompagne d'une création, pour chaque cellule de la zone simulée, de données représentatives d'un marqueur indiquant les cellules déjà parcourues pendant le parcours de la zone simulée par le module de contrôle d'exploitation.

Selon une autre particularité, l'étape de définition de la perturbation consiste en une sélection aléatoire et automatique d'un terminal mobile communicant dans une carte de répartition extraite des moyens de mémorisation du système d'optimisation et en ce que l'étape de sélection d'un ensemble de cellules définissant une zone simulée au sein de la carte de répartition consiste en une sélection d'au moins un serveur dont la cellule peut couvrir l'emplacement auquel se trouve ce terminal dans la carte de répartition.

Selon une autre particularité, les étapes de définition de la perturbation et de sélection d'un ensemble de cellules définissant une zone simulée au sein de la carte de répartition consistent en une sélection d'un terminal mobile communicant présent dans la zone de couverture du réseau et d'au moins les serveurs dont les cellules peuvent couvrir l'emplacement auquel se trouve ce terminal dans la carte de répartition, à partir d'informations saisies et enregistrées par un utilisateur système d'optimisation de ressources, grâce à des moyens interactifs entre l'utilisateur et le système d'optimisation de ressources.

Selon une autre particularité, d'une part, l'étape de définition de la perturbation est mise en oeuvre lors d'une requête de transmission d'un paquet de données par un terminal mobile requérant présent dans la zone de couverture d'un réseau de téléphonie mobile opérationnel et consiste en une localisation du terminal mobile communicant requérant dans la zone de couverture du réseau et une identification du type de transmission qu'il requiert et, d'autre part, l'étape de sélection d'un ensemble de cellules définissant une zone simulée au sein de la carte de répartition consiste en une sélection d'au moins un serveur dont la cellule peut couvrir l'emplacement auquel se trouve ce terminal dans la carte de répartition.

Selon une autre particularité, l'étape de définition de la perturbation par le module gestionnaire d'évènements comporte au moins une des étapes suivantes :
- requête d'une nouvelle transmission, gérée par un module de contrôle des évènements,
- fin d'une transmission, gérée par le module de contrôle des évènements,
- expiration d'un délai de transmission, gérée par le module de contrôle des évènements,
- simulation de la mobilité du terminal mobile communicant responsable de la perturbation, gérée par un module de simulation de mobilité,
- changement des transmissions de paquets en cours, gérée par un module planificateur de paquets.

Selon une autre particularité, l'étape de simulation de la mobilité du terminal mobile communicant responsable de la perturbation consiste en l'une des étapes suivantes :
- modélisation d'une vitesse de déplacement du terminal mobile communicant par changement du rapport signal sur bruit et modélisation du niveau de pertes dues à la propagation par ajustement de variables aléatoires, ou
- changement de la localisation du terminal mobile communicant dans la carte de répartition par sélection d'un terminal mobile communicant voisin dans la carte.

Selon une autre particularité, le procédé comporte une étape de contrôle du trafic entre les serveurs de la zone simulée et les terminaux mobiles communicants présents dans la zone simulée, mise en oeuvre par un module de contrôle du trafic du système d'optimisation définissant, pour chacune des transmissions en cours, des sessions de transmission de paquets, des supports de transmission et des canaux de transmission de ces paquets.

Selon une autre particularité, l'étape de contrôle du trafic par le module de contrôle du trafic du système d'optimisation consiste en une définition d'une pluralité de paramètres relatifs aux services et aux ressources utilisés par les terminaux mobiles communicants présents dans la zone simulée, cette définition résultant d'au moins une étape d'extraction de données représentatives de ces paramètres, à partir d'une carte de répartition, et d'une éventuelle étape de création de données représentatives de ces paramètres, à partir d'informations saisie par un utilisateur du système d'optimisation, de façon à permettre au moins une des étapes suivantes :
- définition de sessions correspondant à des transmissions de paquets de données entre les serveurs de la zone simulée et chacun des terminaux mobiles communicants présents, avec définition des paquets transitant au cours des sessions ;
- définition d'au moins un support associé à chacune des transmissions de chacun des terminaux mobiles communicants, avec définition d'au moins un paramètre parmi des paramètres relatifs au type du support, au rythme du support, à la qualité du signal requise, aux canaux de transmission utilisés pour chacune des cellules et à la gamme de puissances autorisée.

Selon une autre particularité, le procédé comporte une étape de contrôle de l'admissibilité de la transmission de ce paquet, par un module de contrôle d'admission des appels du système d'optimisation de ressources réalisant une définition d'un ensemble, dit ensemble actif, de cellules disponibles au sein de la zone simulée, par vérification de la puissance et des canaux disponibles dans la zone simulée, puis effectuant une décision, en fonction du trafic, de l'admissibilité de la transmission de ce paquet grâce à au moins une voie de transmission, dite support, et au moins un canal de transmission du paquet via au moins un serveur couvrant une des cellules de l'ensemble actif.

Selon une autre particularité, le procédé comporte une étape de contrôle d'exploitation, mise en oeuvre par un module de contrôle d'exploitation du système d'optimisation lors d'une variation du nombre de paquets transmis au sein de la zone simulée et consistant en une vérification de la puissance utilisée par les terminaux mobiles communicants dans les cellules constituant la zone simulée, puis ajustement de la puissance d'au moins un serveur couvrant au moins une cellule de la zone simulée.

Selon une autre particularité, le procédé comporte une étape de contrôle de charge pour chacune des cellules de la zone simulée, mise en oeuvre par un module de contrôle de charge du système d'optimisation, lors d'une utilisation excessive des ressources d'au moins un serveur de la zone simulée, consistant en l'utilisation d'au moins un algorithme de contrôle de charge préalablement enregistré dans les moyens de mémorisation du système d'optimisation, et comportant les étapes suivantes :
- vérification des ressources exploitées, en puissance et en canaux, dans les cellules constituant la zone simulée, pour sélectionner au moins un serveur dont les ressources sont exploitées de manière excessive ;
- sélection d'au moins un paquet parmi les paquets, dits paquets excessifs, utilisant le maximum de puissance ou utilisant un débit maximum sur les canaux de transmission entre les terminaux mobiles communicants présents et le serveur dont les ressources sont exploitées de manière excessive ;
- décision entre un rejet du paquet excessif sélectionné et un déclassement des paramètres de transmission du paquet excessif sélectionné.

Selon une autre particularité, l'étape de décision entre un rejet du paquet excessif sélectionné et un déclassement des paramètres de transmission du paquet excessif sélectionné, lors du contrôle de charge par le module de contrôle de charge, dépend de l'algorithme de contrôle de charge utilisé et comporte les étapes suivantes :
- vérification du type d'aiguillage, par circuit ou par paquet, utilisé par le paquet excessif sélectionné ;
- vérification des paramètres du support utilisé par le paquet excessif sélectionné ;
- vérification du type de liens établis entre le terminal mobile communicant transmettant le paquet excessif sélectionné et son serveur de la zone simulée, pour déterminer si ces liens permettent une bascule automatique du paquet excessif sélectionné d'une cellule à l'autre de la zone simulée lorsque la puissance du signal fourni par un serveur n'est pas suffisante.

Selon une autre particularité, l'étape de déclassement des paramètres de transmission du paquet excessif sélectionné comporte les étapes suivantes :
- sélection, parmi les paquets excessifs sélectionnés, d'au moins un paquet utilisant un aiguillage par paquets et dont les liens ne permettent pas une bascule automatique du paquet d'une cellule à l'autre, puis diminution d'une valeur d'au moins un paramètre du support de ce paquet ou itération de l'étape suivante si aucun paquet ne satisfait ces critères ou si une telle diminution est impossible sans aboutir à un rejet de ce paquet;
- sélection, parmi les paquets excessifs sélectionnés, d'au moins un paquet utilisant un aiguillage par paquets et dont les liens permettent une bascule automatique du paquet d'une cellule à l'autre, puis décision entre soit une itération de l'étape suivante si aucun paquet ne satisfait ces critères, soit une diminution d'une valeur d'au moins un paramètre du support de ce paquet, soit un abandon du lien permettant la bascule automatique de ce paquet, en fonction d'une stratégie de contrôle de bascule définie dans l'algorithme de contrôle de charge, ou en fonction de l'impossibilité de la diminution d'une valeur d'au moins un paramètre du support ;
- sélection, parmi les paquets excessifs sélectionnés, d'au moins un paquet utilisant un aiguillage par circuits et dont les liens permettent une bascule automatique du paquet d'une cellule à l'autre, puis abandon du lien permettant la bascule automatique de ce paquet ou itération de l'étape suivante si aucun paquet ne satisfait ces critères ;
- sélection, parmi les paquets excessifs sélectionnés, d'au moins un paquet utilisant un aiguillage par circuits et dont les liens ne permettent pas une bascule automatique du paquet d'une cellule à l'autre, puis rejet de ce paquet.

Selon une autre particularité, le procédé comporte une étape de contrôle de charge pour chacune des cellules de la zone simulée, mise en oeuvre par un module de contrôle de charge du système d'optimisation, lors d'une diminution de l'utilisation des ressources d'au moins un serveur de la zone simulée, consistant en l'utilisation d'au moins un algorithme de contrôle de charge préalablement enregistré dans les moyens de mémorisation du système d'optimisation, et comportant les étapes suivantes :
- vérification des ressources exploitées, en puissance et en canaux, dans la zone simulée, pour détecter au moins un serveur possédant des ressources inexploitées ;
- sélection d'au moins un paquet parmi les paquets, dits défavorisés, utilisant un débit minimum sur les canaux de transmission du serveur possédant des ressources inexploitées ;
- surclassement des paramètres de transmission du paquet défavorisé sélectionné, par augmentation d'une valeur d'au moins un paramètre du support utilisé par ce paquet défavorisé sélectionné jusqu'à atteindre un niveau d'exploitation satisfaisant, défini dans l'algorithme de contrôle de charge.

Selon une autre particularité, l'étape de contrôle de charge de chacune des cellules de la zone simulée est associée à une étape de détection d'éventuelles oscillations entre deux valeurs d'au moins un paramètre du support utilisé par un paquet en cours de reconfiguration par le module de contrôle de charge et, le cas échéant, d'une attribution de la valeur minimum atteinte par l'oscillation à ce paramètre.

Selon une autre particularité, l'étape de contrôle de charge de chacune des cellules de la zone simulée est mise en oeuvre par activation du module de contrôle de charge par le module de contrôle d'exploitation, pour améliorer la qualité de la transmission des paquets des différents terminaux mobiles communicants présents dans au moins une cellule dans laquelle a lieu la perturbation définie par le module gestionnaire d'évènements.

Selon une autre particularité, l'étape de contrôle de charge de chacune des cellules de la zone simulée est mise en oeuvre par activation automatique du module de contrôle de charge, lorsque la puissance requise par un canal de transmission d'un paquet augmente au-delà d'un maximum autorisé, et consiste en une sélection automatique de ce paquet comme paquet excessif puis un déclassement des paramètres de transmission de ce paquet excessif sélectionné.

Selon une autre particularité, l'étape de contrôle de l'admissibilité de la transmission du paquet du terminal mobile requérant consiste en l'utilisation, par le module de contrôle d'admission, d'au moins un algorithme de contrôle d'admissibilité préalablement enregistré dans les moyens de mémorisation du système d'optimisation et comporte les étapes suivantes :
- définition de l'ensemble actif de cellules disponibles pour la transmission du paquet du terminal requérant, par mesure et classement d'une pluralité de serveurs de la zone simulée, dont le nombre dépend de la localisation et du type du terminal requérant, en fonction de leur participation à la puissance totale des signaux échangés avec le terminal requérant ;
- vérification de la disponibilité de ressources, en canaux et en puissance, pour chacune des cellules ;
- définition de la puissance requise par les canaux de transmission du paquet pour chacune des cellules et vérification que cette puissance requise par chacune des cellules n'excède pas la puissance maximum du support définie pour la transmission du paquet du terminal requérant ;
- vérification que le statut d'au moins une des cellules permet l'admission de transmissions de données par un nouveau terminal mobile communicant.

Selon une autre particularité, l'utilisation, par le module de contrôle d'admission, d'au moins un algorithme de contrôle d'admissibilité définissant les conditions nécessaires pour l'admission d'une nouvelle transmission de données, résulte en une décision, en fonction du trafic, de l'admissibilité de la transmission du paquet du terminal mobile requérant, cette décision consistant en l'une des étapes suivantes :
- acceptation de la transmission du paquet du terminal requérant, lorsque les conditions nécessaires pour l'admission d'une nouvelle transmission sont remplies, après sélection d'un serveur pour la transmission du paquet et sélection du support à utiliser pour cette transmission ;
- reconfiguration par utilisation d'au moins un algorithme de reconfiguration de la transmission de données lorsque les conditions nécessaires pour l'admission d'une nouvelle transmission ne sont pas remplies et que les moyens de mémorisation du système d'optimisation stockent au moins un algorithme de reconfiguration, pour permettre une modification des données relatives au support, et augmenter les chances d'admission de la transmission ;
- rejet de la transmission du paquet du terminal mobile requérant, lorsque les conditions nécessaires à l'admission ne sont pas remplies et que les moyens de mémorisation du système d'optimisation ne stockent pas d'algorithme de reconfiguration ou que le trafic au sein de la zone simulée ne permet pas une reconfiguration efficace de la transmission du paquet.

Selon une autre particularité, l'étape de reconfiguration par utilisation d'au moins un algorithme de reconfiguration de la transmission du paquet, mise en oeuvre par le module de contrôle d'admission lorsque les conditions nécessaires pour l'admission d'une nouvelle transmission,définies par l'algorithme de contrôle d'admissibilité, n'ont pas été remplies et que les moyens de mémorisation du système d'optimisation stockent au moins un algorithme de reconfiguration, résulte soit en l'acceptation de la transmission du paquet par le serveur de l'ensemble actif possédant la meilleure participation à la puissance du signal, lorsque le paquet utilise une technologie d'aiguillage par circuit, puis en une étape de contrôle de charge par le module de contrôle de charge, soit en au moins une des étapes suivantes lorsque le paquet utilise une technologie d'aiguillage par paquets :
- recherche d'un support pour lequel la puissance requise est compatible avec la gamme de puissance d'au moins un canal d'une des cellules de l'ensemble actif, puis, le cas échéant, sélection de ce support et itération de l'étape suivante ou rejet de la transmission du paquet ;
- vérification de la disponibilité de la puissance requise par le support sélectionné dans au moins une des cellules de l'ensemble actif, puis, lorsque ces conditions sont remplies, acceptation de la transmission dans cette cellule disponible ou, lorsque la puissance requise par le support n'est pas disponible, acceptation de la transmission du paquet par le serveur de l'ensemble actif possédant la meilleure participation à la puissance du signal, puis itération de l'étape de contrôle de charge par le module de contrôle de charge.

Selon une autre particularité, le procédé est mis en oeuvre par une application de simulation et d'optimisation de ressources, exécutée sur les moyens de traitement du système d'optimisation de ressources et contrôlant les moyens de traitement et l'interopérabilité du module de contrôle du trafic, du module de contrôle d'admissibilité, du module de contrôle de charge et du module de contrôle d'exploitation des ressources et accédant aux moyens de mémorisation du système d'optimisation pour le chargement des données nécessaires aux différents modules, le procédé comportant une étape d'installation de l'application sur le système d'optimisation par enregistrement, dans les moyens de mémorisation du système d'optimisation, de données permettant l'exécution de l'application sur les moyens de traitement du système d'optimisation.

Selon une autre particularité, l'étape d'installation de l'application sur le système d'optimisation comporte une étape d'implémentation de l'application d'optimisation au sein d'un environnement logiciel fourni par un outil de planification de cellules exécuté sur des moyens de traitement d'au moins un serveur au sein de la zone de couverture du réseau, par enregistrement, dans des moyens de mémorisation du serveur, de données permettant l'exécution de l'application d'optimisation de ressources au sein de l'outil de planification du serveur qui constitue ainsi un système d'optimisation.

Selon une autre particularité, les étapes de définition de la perturbation et de sélection d'une zone simulée sont accompagnées d'une étape de chargement dans une mémoire de travail, de type mémoire vive ou à temps d'accès très court, du système d'optimisation de ressources, d'au moins certaines des données stockées dans les moyens de mémorisation du système d'optimisation.

Un autre but de la présente invention est de proposer un système de simulation et d'optimisation de l'exploitation des ressources d'un réseau de téléphonie mobile permettant un contrôle dynamique, en fonction du trafic, de l'ensemble des ressources du réseau et de l'utilisation des différents types de services offerts aux utilisateurs de terminaux communicants présents dans la zone de couverture du réseau, ainsi qu'une surveillance de la qualité des prestations offertes.

Ce but est atteint par un système de simulation et d'optimisation de l'exploitation des ressources disponibles dans une zone de couverture d'un réseau de téléphonie mobile consistant en un ensemble de zones d'influence, dites cellules, d'une pluralité d'émetteurs/récepteurs, dits serveurs, dont l'exploitation des ressources dépend des transmissions d'ensembles de données, dits paquets, requises par au moins un terminal mobile communicant, dit requérant, présent dans leur zone d'influence, le système étant caractérisé en ce qu'il comporte des moyens de traitement comportant :
- un module gestionnaire d'évènements définissant une variation, dite perturbation, d'au moins une transmission de paquet requise au sein du réseau, la perturbation étant définie à partir d'au moins une carte de répartition statistique stockée dans des moyens de mémorisation du système d'optimisation et comportant des données représentatives de transmissions de paquets de données d'une pluralité de terminaux mobiles communicants présents dans une zone géographique déterminée pendant une tranche horaire déterminée,
- un module de contrôle d'exploitation des ressources définissant une zone simulée au sein de la carte de répartition en sélectionnant un ensemble de cellules comportant au moins la cellule dans laquelle la perturbation a lieu et utilisant un algorithme de parcours stocké dans les moyens de mémorisation du système, pour définir un chemin de parcours de la zone simulée et optimiser successivement les ressources des serveurs couvrant les cellules successives du chemin de parcours.

Selon une autre particularité, au moins une carte de répartition statistique stockée dans des moyens de mémorisation comporte des données représentatives du trafic et de la localisation des serveurs dans la zone de couverture du réseau, ces données représentatives du trafic correspondant à des mesures quantitatives et qualitatives de la localisation d'une pluralité de terminaux mobiles communicants et de serveurs opérant dans la zone de couverture du réseau et des transmissions de paquets de données effectuées au cours de tranches horaires choisies pour leur significativité statistique.

Selon une autre particularité, les moyens de mémorisation stockent des données représentatives d'au moins une densité prédéterminée de terminaux mobiles communicants dans la zone de couverture du réseau, d'au moins une loi de distribution aléatoire de ces terminaux mobiles communicants et d'au moins une loi d'assignation aléatoire de transmissions de paquets de données à ces terminaux, l'ensemble de ces données permettant au module gestionnaire d'évènements de générer au moins une carte de répartition statistique comportant des données représentatives du trafic et de la localisation des serveurs dans la zone de couverture du réseau, les données représentatives du trafic correspondant, d'une part, à la localisation d'une pluralité de terminaux mobiles communicants distribués aléatoirement dans la zone de couverture du réseau selon la densité prédéterminée et, d'autre part, aux transmissions de paquets de données requises par ces terminaux assignées aléatoirement aux différents terminaux présents dans le réseau.

Selon une autre particularité, les moyens de mémorisation du système d'optimisation stockent au moins un algorithme de parcours permettant au module de contrôle d'exploitation de définir un chemin de parcours des cellules dans un ordre croissant en fonction de leur distance par rapport à la première cellule sélectionnée, selon au moins un des principes suivants :
- sélection d'une cellule quelconque de la zone simulée puis itérations d'une sélection d'une cellule adjacente à la cellule sélectionnée précédemment, jusqu'à ce que toutes les cellules de la zone simulée aient été successivement sélectionnées,
- définition de cercles concentriques centrés autour de la cellule dans laquelle a lieu la perturbation et sélections successives des cellules de la zone simulée par lesquelles passent ces cercles concentriques,
- création de données représentatives d'une grille de découpage de la zone simulée en divisions comportant chacune un index obtenu à partir des coordonnées des cellules et permettant de localiser chacune des divisions et de les classer dans un ordre croissant en fonction de leur distance par rapport à une division centrale, puis définition de cercles concentriques centrés autour de la cellule dans laquelle a lieu la perturbation et définition de vecteurs indiquant le trajet à parcourir d'une division à l'autre au sein de la zone simulée, pour permettre des sélections successives des divisions de la zone simulée par lesquelles passent ces cercles concentriques et des sélections successives des cellules contenues dans chacune de ces divisions.

Selon une autre particularité, l'algorithme de parcours stocké dans les moyens de mémorisation du système d'optimisation et la grille de découpage de la zone simulée en divisions, comportant des données représentatives des coordonnées de la division, permettent au module de contrôle d'exploitation de déterminer la localisation des cellules ainsi que des divisions et cellules voisines et de créer, pour chaque cellule de la zone simulée, des données représentatives des cellules voisines dans la zone simulée et de données représentatives d'un marqueur indiquant les cellules déjà parcourues pendant le parcours de la zone simulée par le module de contrôle d'exploitation, de façon à définir un chemin de parcours de chacune des cellules les unes après les autres.

Selon une autre particularité, l'algorithme de parcours stocké dans les moyens de mémorisation du système d'optimisation permet au module de contrôle d'exploitation de déterminer un chemin de parcours aléatoire des cellules au sein d'une division.

Selon une autre particularité, le module gestionnaire d'évènements comporte au moins un type de moyens de sélection parmi les suivants :
- des moyens de sélection aléatoire et automatique d'un terminal mobile communicant dans une carte de répartition extraite des moyens de mémorisation,
- des moyens de sélection déterministe d'un terminal mobile communicant sélectionné en fonction d'informations saisies et enregistrées par un utilisateur système d'optimisation de ressources, grâce à des moyens interactifs entre l'utilisateur et le système d'optimisation de ressources,
- des moyens de sélection opérationnelle d'un terminal mobile communicant localisé automatiquement dans la zone de couverture d'un réseau de téléphonie mobile opérationnel.

Selon une autre particularité, le module gestionnaire d'évènements comporte au moins un des modules suivantes :
- un module de contrôle des évènements pour définir au moins des requêtes de nouvelles transmissions, des fins de transmission et des expirations de délais de transmission,
- un module de simulation de mobilité simulant la mobilité du terminal mobile communicant responsable de la perturbation,
- un module planificateur de paquets gérant des changements de transmissions de paquets en cours.

Selon une autre particularité, les moyens de traitement comportent un module de contrôle d'admissibilité des appels comportant des moyens de vérification de la puissance et des canaux disponibles dans la zone simulée pour définir un ensemble, dit ensemble actif, de cellules disponibles au sein de la zone simulée et décider, en fonction du trafic, de l'admissibilité de la transmission du paquet du terminal requérant, grâce à au moins une voie de transmission, dite support, sur au moins un canal d'au moins un serveur couvrant une des cellules de l'ensemble actif.

Selon une autre particularité, les moyens de traitement comportent un module de contrôle du trafic entre les serveurs de la zone simulée et les terminaux mobiles communicants présents dans la zone simulée, définissant, pour chacune des transmissions en cours, des sessions de transmission de paquets, des supports et des canaux de transmission.

Selon une autre particularité, le module de contrôle d'exploitation comporte des moyens de vérification de la puissance utilisée dans chacune des cellules constituant la zone simulée et comporte des moyens d'ajustement de la puissance d'au moins un serveur couvrant au moins une cellule de la zone simulée.

Selon une autre particularité, les moyens de traitement comportent un module de contrôle de charge activé lors d'une utilisation excessive des ressources d'au moins un serveur de la zone simulée et accédant aux moyens de mémorisation du système pour en extraire au moins un algorithme de contrôle de charge, contrôler la charge de chacune des cellules de la zone simulée et comportant des moyens de décision influant sur la transmission des paquets par les serveurs de la zone simulée.

Selon une autre particularité, le système comporte une mémoire de travail, de type mémoire vive ou à temps d'accès très court, dans laquelle sont chargées, à partir des moyens de mémorisation du système, au moins certaines données parmi au moins les données représentatives des cartes de répartition et des algorithmes de parcours.

Selon une autre particularité, les moyens de mémorisation du système stockent des données permettant l'exécution d'une application d'optimisation de ressources sur les moyens de traitement du système d'optimisation, cette application contrôlant les moyens de traitement et l'interopérabilité du module de contrôle du trafic, du module de contrôle d'admission des appels, du module du contrôle d'exploitation et du module du contrôle de charge.

Selon une autre particularité, l'application est implémentée au sein d'un environnement logiciel fourni par un outil de planification de cellule exécuté sur les moyens de traitement du système d'optimisation de ressources.

Selon une autre particularité, le système est implémenté dans au moins un serveur couvrant une cellule de la zone de couverture du réseau, de façon à optimiser en temps réel, les ressources du serveur et des serveurs voisins dans la zone de couverture du réseau, ce serveur constituant ainsi un système d'optimisation des ressources du réseau.

D'autres particularités et avantages de la présente invention apparaîtront plus clairement à la lecture de la description ci-après, faite en référence aux dessins annexés, dans lesquels :
- la figure 1 représente un mode de réalisation du système de simulation et d'optimisation de l'exploitation des ressources d'un réseau de téléphonie mobile et symbolise son principe de fonctionnement,
- la figure 2 représente un mode de réalisation du simulateur du système selon l'invention, et détaille en particulier le module gestionnaire d'évènements,
- la figure 3 représente un mode de réalisation du système d'optimisation, avec un détail d'une carte de répartition statistique des terminaux mobiles communicants présents dans la zone de couverture du réseau pendant une tranche horaire déterminée,
- la figure 4 représente un détail d'un mode de réalisation d'un chemin de parcours appliqué à une carte de répartition statistique, pour parcourir les différents serveurs du réseau,
- les figures 5A, 5B et 5C représentent un détail de trois modes de réalisation des chemins de parcours appliqués à une carte de répartition statistique, pour parcourir les différents serveurs du réseau,
- la figure 6 représente les étapes principales d'un mode de réalisation du procédé selon l'invention,
- la figure 7 représente les étapes détaillées mises en oeuvre au cours de la définition d'une perturbation du trafic au sein du réseau, selon plusieurs modes de réalisation possibles du procédé selon l'invention,
- la figure 8 représente les étapes détaillées mises en oeuvre au cours du contrôle du trafic au sein du réseau, selon un mode de réalisation du procédé selon l'invention,
- la figure 9 représente les étapes détaillées mises en oeuvre au cours du contrôle de l'admissibilité de la transmission d'un nouveau paquet, selon un mode de réalisation du procédé selon l'invention,

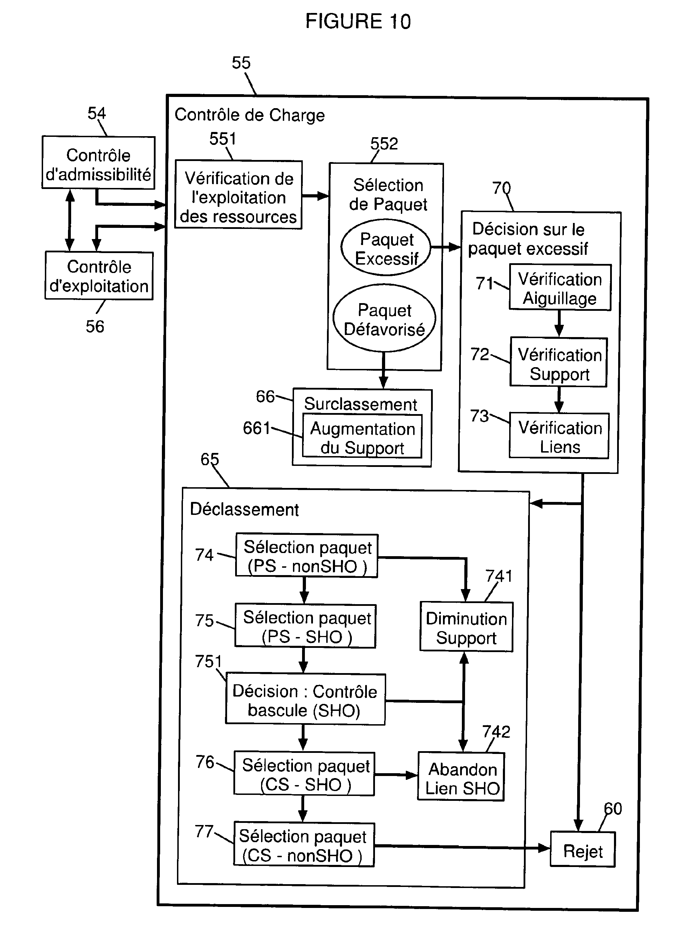

- la figure 10 représente les étapes détaillées mises en oeuvre lors du contrôle de la charge des cellules constitutives du réseau de téléphonie mobile.

La présente invention concerne un procédé et un système (1) de simulation et d'optimisation de l'exploitation des ressources des émetteurs/récepteurs (ER), dits serveurs, dont les zones d'influence, dites cellules, constituent la zone de couverture d'un réseau (RT) de téléphonie mobile. L'invention repose, d'une part, sur l'utilisation de données statistiques correspondant à des cartes (CR) de répartition statistique du trafic et de la localisation des terminaux mobiles communicants dans la zone de couverture du réseau (RT) et, d'autre part, sur l'utilisation d'algorithmes, définis par les gestionnaires du réseau (RT), pour contrôler les décisions prises par le système (1) d'optimisation pour gérer les transmissions de données requises par les terminaux mobiles communicants présents dans la zone de couverture du réseau. Un réseau (RT) simulé est donc représenté sous la forme de données représentatives de cartes (CR) de répartition statistique. Le procédé selon l'invention comporte donc une étape préalable d'établissement (51) d'une pluralité des cartes (CR) de répartition, Cette étape d'établissement (51) des cartes (CR) s'accompagne naturellement de l'enregistrement de ces cartes dans les moyens (11) de mémorisation du système (1) d'optimisation. L'utilisation de ces cartes (CR) de répartition permet de limiter les capacités de calcul nécessaires à la mise en oeuvre de l'invention. De plus, les cartes de répartition sont basées sur les transmissions (T) requises par les terminaux mobiles communicants présents dans le réseau et elles permettent donc différents types de calculs statistiques pour chacun des paramètres relatifs aux transmissions (T) de ces terminaux mobiles communicants.

Dans un premier mode de réalisation, ces données représentatives des cartes (CR) peuvent correspondre à des mesures quantitatives et qualitatives du trafic, préalablement effectuées dans un réseau réel et opérationnel par les gestionnaires du réseau (RT), puis enregistrées dans des moyens (11) de mémorisation du système (1). Les mesures quantitatives et qualitatives du trafic et de la localisation des terminaux mobiles communicants sont effectuées au cours de tranches horaires choisies pour leur significativité statistique et les données moyennes obtenues sont regroupées dans des cartes (CR) de répartition statistique des terminaux mobiles communicants présents dans la zone de couverture du réseau (RT). Ces cartes (CR) de répartition, correspondant chacune à l'une des tranches horaires choisies, contiennent des informations moyennes concernant la topologie du réseau (RT), la position géographique des terminaux mobiles communicants et différents paramètres relatifs à l'exploitation des ressources par les terminaux mobiles communicants en cours de transmissions de données.

Dans un second mode de réalisation, ces données représentatives des cartes (CR) peuvent correspondre à des données générées par le simulateur lui-même grâce à des lois statistiques créées et enregistrées par les gestionnaires du réseau (RT) dans les moyens (11) de mémorisation du système (1). Ces lois statistiques stockées dans les moyens (11) de mémorisation correspondent, par exemple, à des données représentatives d'au moins une densité prédéterminée de terminaux mobiles communicants dans la zone de couverture du réseau (RT), d'au moins une loi de distribution aléatoire de ces terminaux mobiles communicants et d'au moins une loi d'assignation aléatoire de transmissions (T) de paquets (P) de données à ces terminaux. L'ensemble de ces données permettent à un module (EM) gestionnaire d'évènements de générer au moins une carte (CR) de répartition statistique comportant des données représentatives d'un trafic simulé et de la localisation des serveurs (ER) dans la zone de couverture du réseau (RT) simulé. Les données représentatives du trafic correspondent alors, d'une part, à la localisation d'une pluralité de terminaux mobiles communicants distribués aléatoirement (d'après la loi de distribution aléatoire) dans la zone de couverture du réseau (RT) selon la densité prédéterminée et, d'autre part, aux transmissions (T) de paquets (P) de données requises par ces terminaux assignées aléatoirement (d'après la loi d'assignation aléatoire) aux différents terminaux présents dans le réseau (RT).

En particulier, la simulation repose sur des évènements gérés par un module (EM) gestionnaire d'évènements. Ces évènements consistent en des variations, au sein du réseau, des transmissions (T) de paquets (P) de données en cours. Ces transmissions (T), avec leurs différents paramètres détaillés ci-après, sont gérées par le système selon l'invention et constituent un trafic au sein du réseau qui se trouve dans un état stable. Toute variation d'un des paramètres des transmissions de paquets (P) en cours constitue donc une perturbation de l'état stable dans lequel se trouve le réseau (RT). La perturbation gérée par le module (EM) gestionnaire d'évènements peut consister soit en un évènement réel détecté dans un réseau opérationnel et reproduit dans le réseau simulé, soit en un évènement fictif et modélisé dans le réseau simulé. L'invention consiste alors à simuler et optimiser l'exploitation des ressources dans le réseau (RT) simulé, mais soit sur la base d'évènements réels détectés dans un réseau opérationnel, soit sur la base d'évènements fictifs et modélisés dans le réseau simulé. L'invention est dirigée par des évènements perturbant l'état du réseau et déclenchant la simulation pour permettre l'optimisation des ressources et un retour à un état stable (simulation de type « event-driven », selon la terminologie anglaise) mais elle peut également incorporer une gestion du temps (simulation de type « time-driven », selon la terminologie anglaise), par exemple en simulant une perturbation de l'état du réseau à l'issue d'intervalles de temps prédéterminés.

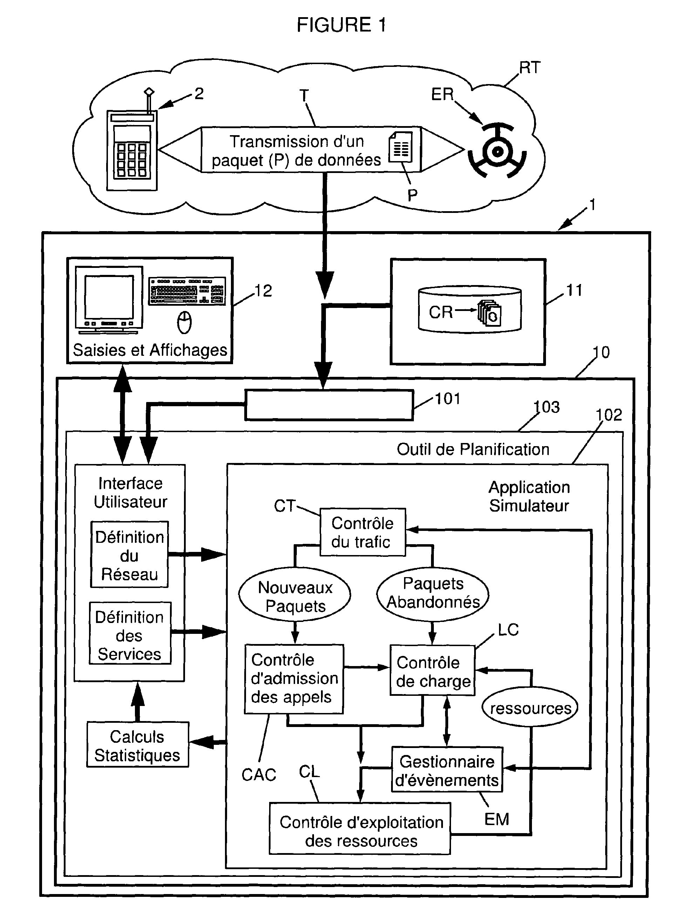

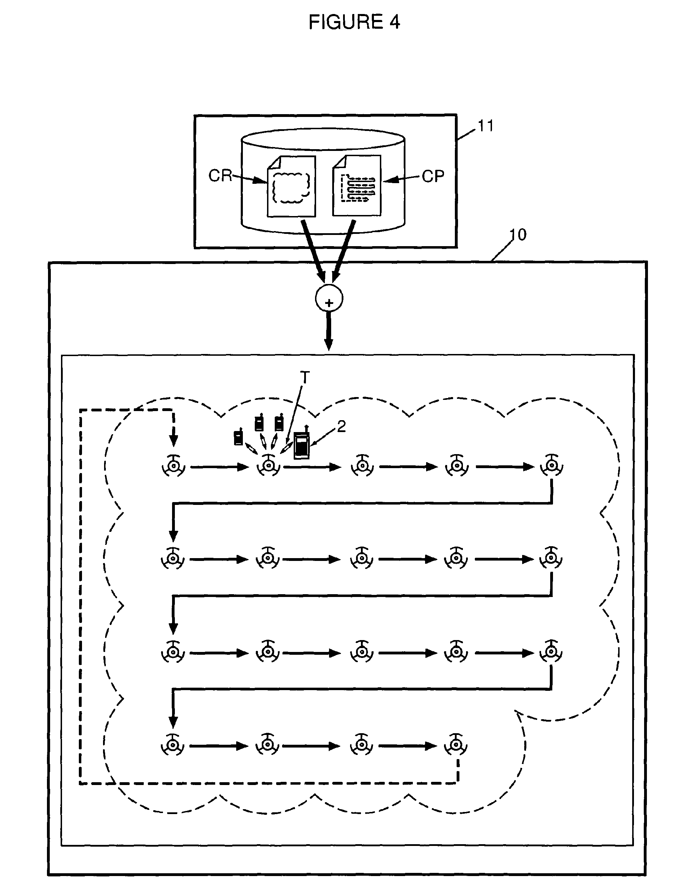

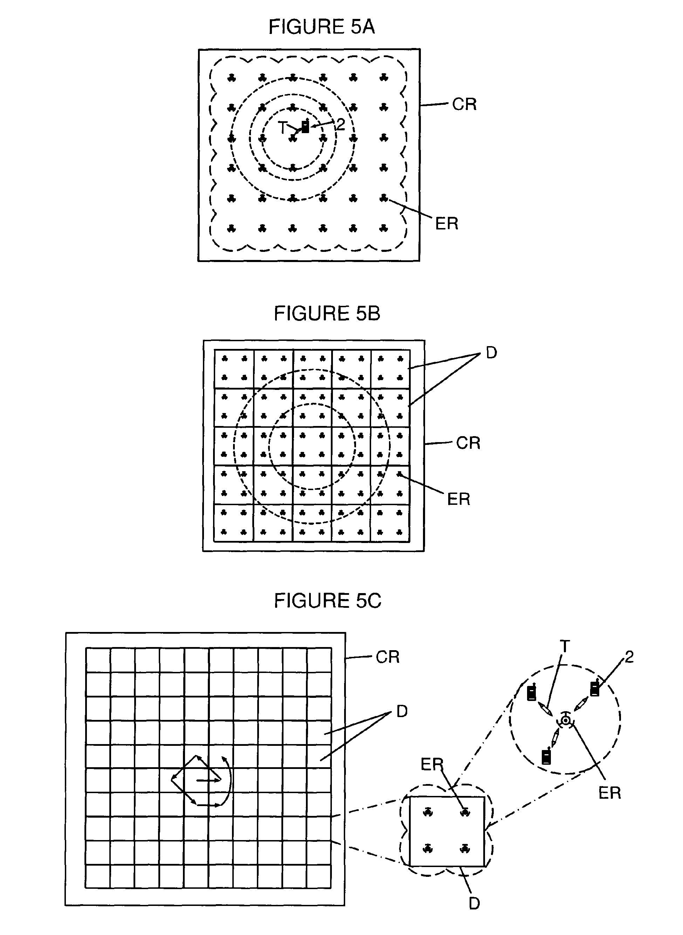

Le système (1) d'optimisation selon l'invention, particulièrement visible sur la figure 1, comporte donc un module (EM) gestionnaire d'évènements permettant de définir au moins une perturbation au sein du réseau simulé à partir d'une carte (CR) de répartition extraite des moyens (11) de mémorisation du système (1). Ce module (EM) gestionnaire d'évènements coopèrent avec un module (CT) de contrôle du trafic permettant de définir un certains nombres de paramètres relatifs aux transmissions de données au sein du réseau. Cette perturbation, réelle ou fictive, active un module (CL) de contrôle d'exploitation qui a pour rôle de rétablir l'état stable du réseau en optimisant les ressources de la cellule dans laquelle a lieu la perturbation et éventuellement des cellules voisines. Le module (CL) de contrôle d'exploitation des ressources définit une zone simulée (ZS) au sein de la carte (CR) de répartition, en sélectionnant un ensemble de cellules comportant au moins la cellule dans laquelle la perturbation a lieu et utilise un algorithme de parcours stocké dans les moyens (11) de mémorisation du système (1), pour définir un chemin de parcours (CP) de la zone simulée (ZS) et optimiser successivement les ressources des serveurs (ER) couvrant les cellules successives du chemin de parcours (CP), dans un ordre croissant en fonction de la distance de ces cellules par rapport à la première cellule sélectionnée. Ce module de contrôle d'exploitation (CL, pour l'anglais « Convergence Loop ») va alors parcourir le réseau, en suivant le chemin de parcours (CP) défini, à la recherche de cellules dans lesquelles les ressources sont insuffisantes. Pour chaque cellule dans lesquelles les ressources sont insuffisantes, le module (CL) de contrôle d'exploitation des ressources activera au moins un des différents modules détaillés ci-après pour faire converger les ressources des cellules vers un état stable. Un module (CAC) de contrôle d'admission, utilisant au moins un algorithme de contrôle d'admission, permet de décider de l'admissibilité d'une transmission (T) et un module (LC) de contrôle de charge utilise au moins un algorithme de contrôle de charge pour permettre une réorganisation de l'exploitation des ressources. Le module (CL) de contrôle d'exploitation utilise également au moins un algorithme de contrôle de puissance pour décider de la puissance à répartir sur les différents serveurs du réseau. L'utilisation de ces différents algorithmes par le système (1) d'optimisation permet de réguler le nombre de transmissions de données dans chacune des cellules du réseau (RT), mais également de réguler l'exploitation des ressources telles que la puissance des serveurs et le débit utilisé par les terminaux mobiles communicants présents dans leur zone d'influence (cellule). Un premier chemin de parcours (CP), particulièrement visible sur la figure 4 consiste en une sélection d'une cellule quelconque de la zone simulée (ZS) puis en une pluralité d'itérations d'une sélection d'une cellule adjacente à la cellule sélectionnée précédemment, jusqu'à ce que toutes les cellules de la zone simulée (ZS) aient été successivement sélectionnées. L'étape d'utilisation de l'algorithme de parcours par le module (CL) de contrôle d'exploitation pourra s'accompagner d'une étape de création, pour chaque cellule de la zone simulée (ZS), de données représentatives des cellules voisines dans la zone simulée (ZS), de façon à définir un chemin de parcours (CP) de chacune des cellules les unes après les autres. Ces données pourront, par exemple, être chargées en même temps que les données de la carte de répartition et elles permettront d'accélérer le traitement des cellules successives. Dans un autre mode de réalisation, l'algorithme de parcours utilisé par le module (CL) de contrôle d'exploitation définit des cercles concentriques centrés autour de la cellule dans laquelle a lieu la perturbation, comme représenté sur la figure 5A. Le chemin de parcours (CP) définit alors par le module (CL) de contrôle d'exploitation consistera en des sélections successives des cellules de la zone simulée (ZS) par lesquelles passent ces cercles concentriques. Comme représenté sur la figure 5B, cet algorithme de parcours pourra, par exemple, permettre au module (CL) de contrôle d'exploitation de diviser la zone simulée (ZS) en une pluralité de zones, appelées divisions, comportant chacune au moins une cellule couverte par un serveur (ER). Pour cela, l'algorithme de parcours sera utilisé pour créer une grille de découpage de la zone simulée (ZS) en divisions (D) comportant chacune un index obtenu à partir des coordonnées des cellules et permettant de localiser chacune des divisions et de les classer dans un ordre croissant en fonction de leur distance par rapport à une division centrale. Les divisions de la zone simulée pourront avoir une forme, par exemple, carrée ou hexagonale et la localisation de la division sera définie par son index obtenu à partir des coordonnées des cellules. Ainsi, le module (CL) de contrôle d'exploitation crée des données représentatives de divisions (D) de la zone simulée (ZS) et l'utilisation de cet algorithme de parcours pourra s'accompagner d'une étape de définition d'un chemin de parcours (CP) comportant au moins un vecteur indiquant le trajet à parcourir d'une division (D) à l'autre au sein de la zone simulée (ZS), comme représenté sur la figure 5C. Dans un autre mode de réalisation, le parcours des cellules de la zone simulée (ZS) pourra s'accompagner également d'une création de données représentatives d'un marqueur indiquant les cellules déjà parcourues pendant le parcours de la zone simulée par le module (CL) de contrôle d'exploitation, lorsque aucun vecteur ne définit précisément le chemin à parcourir. Ce chemin de parcours permettra des sélections successives des divisions (D) de la zone simulée (ZS) par lesquelles passent ces cercles concentriques et des sélections successives des cellules contenues dans chacune de ces divisions (D). Les données représentatives de la grille de découpage de la zone simulée (ZS) en divisions (D) définies par le module (CL) de contrôle d'exploitation pourront comporter des données représentatives des coordonnées de la division permettant au module (CL) de contrôle d'exploitation de déterminer la localisation des cellules ainsi que des divisions (D) et cellules voisines, pour faciliter le traitement des cellules des différentes divisions, notamment dans le cas où au moins certaines divisions comportent plusieurs cellules. Dans une variante de réalisation du chemin de parcours, les cellules d'une division (D) pourront être sélectionnée de façon aléatoire.

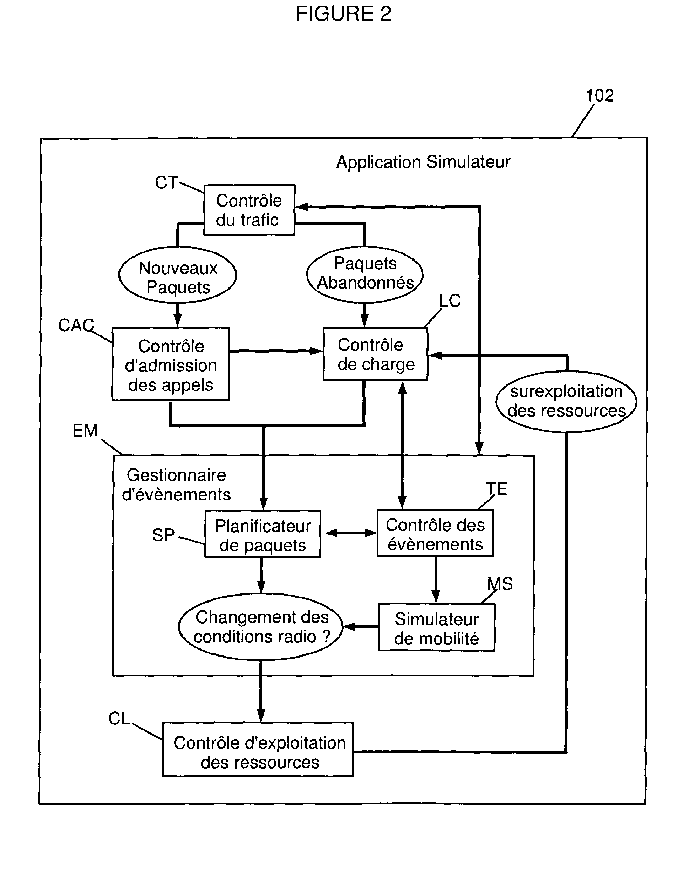

La perturbation définie par le module (EM, pour l'anglais « Event Manager ») gestionnaire d'événements peut consister en différents évènements, tels que, par exemple, une nouvelle transmission (T), ou la fin d'une transmission (T) en cours. Le module (EM) gestionnaire d'évènements, comme particulièrement visible sur la figure 2, peut comporter différents modules capables de gérer différents types de perturbations. Par exemple, un module (TE) de contrôle des évènements permet au module (EM) gestionnaire d'évènements de définir au moins des requêtes de nouvelles transmissions (T), des fins de transmission (T) et des expirations de délais de transmission (T), un module (MS) de simulation de mobilité permet au module (EM) gestionnaire d'évènements de simuler la mobilité du terminal (2) mobile communicant responsable de la perturbation et un module (SP) planificateur de paquets permet au module (EM) gestionnaire d'évènements de gérer des changements de transmissions (T) de paquets (P) en cours.

Les données représentatives des cartes (CR) de répartition et des différents algorithmes décrits dans la présente invention sont stockés dans des moyens (11) de mémorisation du système (1) d'optimisation et peuvent donc être facilement mis à jour si nécessaire. Ces données, nécessaires à la mise en oeuvre de l'invention, peuvent ainsi être chargées dans les moyens (10) de traitement du système (1) d'optimisation, par exemple dans une mémoire (101) de travail de type mémoire vive ou à temps d'accès très court. Ce chargement des données permet d'éviter les temps d'accès aux moyens (11) de mémorisation et, par conséquent, d'accélérer le traitement des informations. Ces particularités de l'invention facilitent son implémentation dans un réseau opérationnel, même si ce dernier est constitué d'un nombre important de cellules. Par exemple, l'invention peut être mise en oeuvre par une application (102) exécutée sur les moyens (10) de traitement du système (1) d'optimisation. Cette application (102) contrôle les moyens (10) de traitement du système (1) d'optimisation et permet l'interopérabilité entre le module (EM) gestionnaire d'évènements, le module (CL) de contrôle d'exploitation, le module (CT) de contrôle du trafic, le module (CAC) de contrôle d'admissibilité et le module (LC) de contrôle de charge. L'application (102) accède aux moyens (11) de mémorisation du système (1) d'optimisation pour charger les données nécessaires aux différents modules, comme les cartes (CR) de répartition et les différents algorithmes. Le procédé selon ce mode de réalisation de l'invention comporte naturellement une étape d'installation (47) de l'application (102) sur le système (1) d'optimisation par enregistrement, dans les moyens (11) de mémorisation du système (1) d'optimisation, de données permettant l'exécution de l'application (102) sur les moyens (10) de traitement du système (1) d'optimisation.

Dans un autre mode de réalisation de l'invention, l'application (102) d'optimisation est implémentée directement dans les serveurs (ER) du réseau. Les serveurs des réseaux de téléphonie mobile exécutent, de façon connue en soi, un outil (103) de planification de cellule sur leurs moyens de traitement. Cet outil (103) de planification de cellule permet de planifier les transmissions de données requises par les terminaux mobiles communicants. Cet outil (103) de planification de cellule fournit un environnement logiciel dans lequel l'application (102) peut être implémentée. L'étape d'installation (47) de l'application (102) comporte alors une étape d'implémentation (48) de l'application (102) au sein de cet environnement logiciel, par enregistrement, dans des moyens de mémorisation du serveur (ER), de données permettant l'exécution de l'application (102) d'optimisation de ressources au sein de l'outil (103) de planification. Le serveur exécutant cette application (102) devient alors ainsi un système (1) d'optimisation selon l'invention.

Par système (1) d'optimisation, on entend donc tout système informatique muni des moyens décrits ici, par exemple grâce à l'exécution de l'application (102) d'optimisation des ressources. Par terminal mobile communicant, on entend tout terminal mobile possédant des moyens de communication par téléphonie mobile. Par exemple, un tel terminal pourra consister en un téléphone portable et notamment un portable de troisième génération, mais également en un ordinateur portable ou un assistant digital personnel (PDA, « personal digital assistant », selon la terminologie anglaise) muni de moyens de communication par téléphonie mobile. N'importe quel terminal mobile communicant présent dans la zone de couverture du réseau (RT) peut ainsi effectuer une requête de transmission d'un paquet (P) de données et déclencher la mise en oeuvre de l'invention. De même, l'invention permet de simuler tout type de variation des transmissions (T) (perturbation) au sein du réseau, quelque soit le terminal (réel ou simulé) responsable de cette perturbation. Le terminal mobile communicant envoyant cette requête est alors appelé terminal (2) mobile requérant et le paquet (P) de données dont il requiert la transmission doit être évalué par le système (1) d'optimisation pour décider si cette transmission peut être acceptée ou non, en fonction du trafic moyen estimé d'après la carte (CR) de répartition correspondant à la tranche horaire pendant laquelle à lieu cette requête de transmission.

L'invention prévoit également un mode de réalisation dans lequel le système (1) d'optimisation consiste en un système informatique (un ordinateur, par exemple) sur lequel un utilisateur (opérateur) effectue des simulations du trafic d'après les cartes (CR) de répartition, par exemple pour tester l'efficacité de différents algorithmes en fonction de différents paramètres relatifs au trafic et/ou différents paramètres affectés à un paquet (P) d'un terminal (2) requérant. Le terminal (2) requérant peut être sélectionné par l'utilisateur ou de façon automatique et aléatoire, parmi les terminaux mobiles communicants d'une des cartes (CR) de répartition, également sélectionnée par l'utilisateur ou de façon automatique et aléatoire. Des moyens (12) interactifs entre l'utilisateur et le système (1) d'optimisation permettent à cet utilisateur de déterminer l'ensemble des données qui doivent être utilisées par l'application (102). L'utilisateur peut alors sélectionner une carte (CR) de répartition et un terminal mobile communicant ou définir les paramètres à partir desquels ces sélections doivent être effectuées automatiquement par le système (1), à partir des lois statistiques mentionnées précédemment. Il peut également définir lui-même un paquet (P) complètement virtuel en saisissant les paramètres requis pour la simulation. Il peut également sélectionner les paramètres de simulation dont il souhaite obtenir une évaluation par des calculs statistiques ou programmer plusieurs simulations avec différents paramètres et sélectionner les paramètres de simulation dont il souhaite obtenir une comparaison. Les paramètres à définir et les résultats sont présentés à l'utilisateur grâce aux moyens (12) interactifs, par exemple via une interface graphique de l'application (102) ou de l'outil (103) de planification.

Les moyens (10) de traitement du système (1) d'optimisation comportent des moyens de sélection accédant aux moyens (11) de mémorisation du système (1) pour en extraire la carte (CR) de répartition statistique correspondant à la tranche horaire au cours de laquelle le terminal (2) mobile requérant requiert la transmission d'un paquet (P). Ces moyens de sélection sont, par exemple, implémentés dans le module (EM) gestionnaire d'évènements et peuvent consister en des moyens de sélection aléatoire et automatique d'un terminal (2) mobile communicant dans une carte (CR) de répartition extraite des moyens (11) de mémorisation. Ils peuvent également consister en des moyens de sélection déterministe d'un terminal (2) mobile communicant sélectionné en fonction d'informations saisies et enregistrées par un utilisateur système (1) d'optimisation de ressources, grâce à des moyens interactifs (12) entre l'utilisateur et le système (1) d'optimisation de ressources. Enfin, ces moyens de sélection peuvent consister en des moyens de sélection opérationnelle d'un terminal (2) mobile communicant localisé automatiquement dans la zone de couverture d'un réseau (RT) de téléphonie mobile opérationnel. Ainsi, le système (1) d'optimisation permet à son utilisateur de définir si la position du terminal (2) requérant doit être choisie parmi les positions des différents terminaux mobiles communicants de cette carte ou si elle doit être sélectionnée par l'utilisateur du système. De plus, le système permet de définir si les paramètres de transmission du paquet (P) de ce terminal (2) requérant doivent correspondre soit à ceux du terminal sélectionné dans la carte, soit à des paramètres définis par l'utilisateur, soit aux paramètres de transmission réellement requis par le terminal (2) requérant dans le cas d'une implémentation dans un réseau (RT) opérationnel. Les moyens de sélection du système permettent alors au module (CL) de contrôle d'exploitation de sélectionner, dans la carte (CR) extraite, un ensemble de cellules définissant une zone simulée (ZS) dans laquelle se trouve le terminal (2) mobile requérant sélectionné.

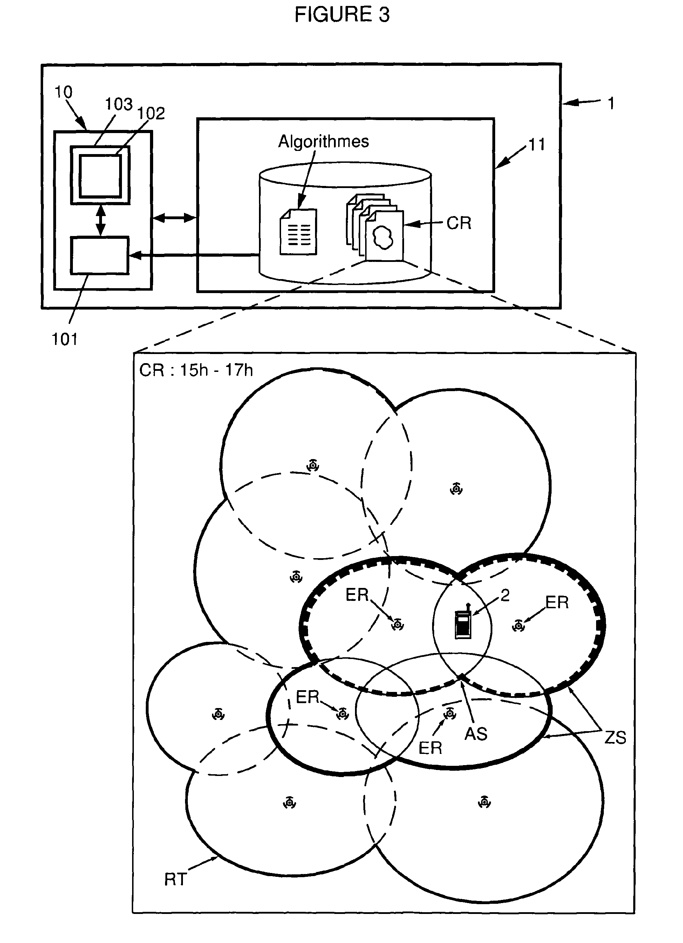

Ainsi, selon un mode de réalisation du procédé selon l'invention, le module (EM) gestionnaire d'évènements effectue une première étape de définition (50) d'une perturbation à partir d'au moins une carte (CR) de répartition statistique stockée dans des moyens (11) de mémorisation du système (1) d'optimisation. Comme expliqué ci-dessus, cette étape de définition est effectuée en fonction du mode de fonctionnement du système choisi par les gestionnaires du réseau. Ensuite, le module de contrôle d'exploitation effectue une étape de sélection (52) d'un ensemble de cellules définissant une zone simulée (ZS) au sein de la carte (CR) de répartition statistique. La figure 3 symbolise, à titre d'exemple, une carte (CR) de répartition correspondant à une tranche horaire comprise entre 15 heures et 17 heures (CR : 15h - 17h), dans laquelle les cellules couvertes par les serveurs (ER) sont représentées sont la forme de cercles et d'ellipses. La zone simulée (ZS) est représentée en traits gras pleins et contient des cellules qui sont représentées en traits pleins. Les cellules en dehors de la zone simulée (ZS) sont représentées en traits fins pointillés et au sein de la zone simulée, un ensemble actif (AS) de cellules, qui sera détaillé plus tard, est représenté en traits gras pointillés. Comme mentionné précédemment, les paramètres saisis par l'utilisateur du système (1), pour définir la simulation et l'optimisation à effectuer, déterminent les modes opératoires selon lesquels le système effectue la simulation et notamment la sélection (52). Cette étape de sélection (52) d'une zone simulée (ZS) peut donc consister en une sélection aléatoire et automatique, par le système (1) lui-même, d'un terminal (2) mobile communicant présent dans la zone de couverture du réseau (RT), accompagnée d'une sélection des serveurs (ER) dont les cellules peuvent couvrir l'emplacement auquel se trouve ce terminal dans la carte (CR) de répartition. L'utilisateur du système pourra également déterminer à l'avance l'étendue maximum de la zone simulée (ZS), par exemple en nombre de cellules. Cette sélection (52) de la zone simulée (ZS) peut également être effectuée par l'utilisateur du système (1) et consister en une sélection d'un terminal (2) mobile communicant présent dans une carte (CR) de répartition représentant la zone de couverture du réseau (RT), accompagnée d'une sélection des serveurs (ER) voisins, réalisée soit de façon automatique et aléatoire par le système lui-même, soit par l'utilisateur s'il le souhaite, soit de façon automatique en fonction d'une localisation d'un terminal (2) mobile communicant ayant réellement généré une perturbation dans le réseau opérationnel. Les données représentatives des mesures quantitatives et qualitatives contenues dans la carte (CR) sélectionnée et correspondant au trafic au sein de la zone simulée (ZS) sont alors chargées dans le système (1) d'optimisation de ressources, par exemple la mémoire (101) de travail.

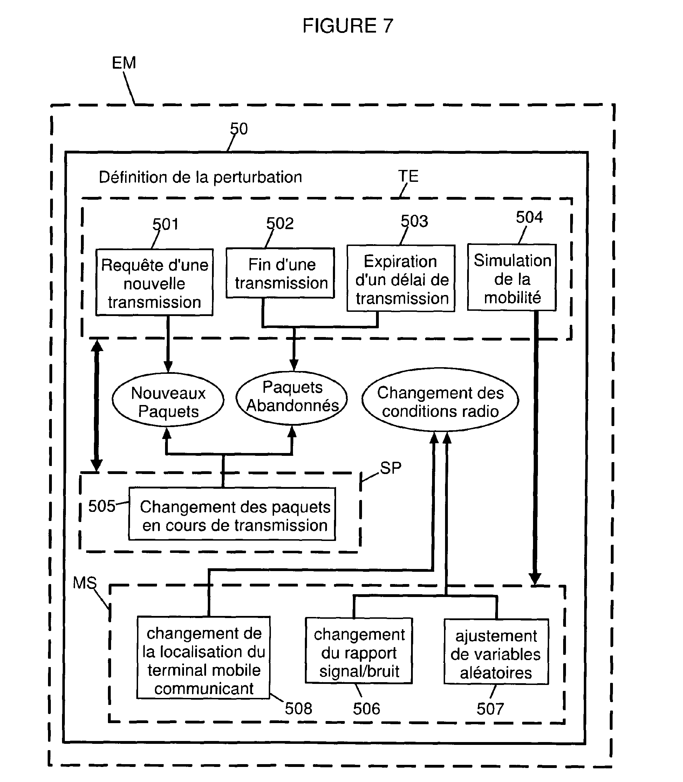

Dans un mode de réalisation de l'invention, le module (EM) gestionnaire d'évènements comporte un module (TE) de contrôle des évènements. Ce module (TE) de contrôle des évènements permet de définir des requêtes de nouvelles transmissions (T) ou des fins de transmission (T), dues à un terminal mobile communicant réellement présent dans le réseau ou simulé par le système selon l'invention. Ce module (TE) de contrôle des évènements permet également de gérer des délais de transmission (T) qui engendrent la fin de la transmission s'ils sont dépassés et permet donc de définir des expirations de délais de transmission. Ainsi, l'étape de définition (50) de la perturbation par le module (EM) gestionnaire d'évènements pourra consister, comme particulièrement visible sur la figure 7, en une requête (501) d'une nouvelle transmission (T), une fin (502) d'une transmission (T) et une expiration (503) d'un délai de transmission (T), toutes les trois gérées par le module (TE) de contrôle des évènements. Le module (EM) gestionnaire d'évènements peut également comporter un module (SP) planificateur de paquets, qui gère les changements des transmissions (T) de paquets (P) en cours. Ce module (SP) planificateur de paquets permet de définir les évènements qui déclenchent la perturbation dans le réseau. L'étape de définition (50) de la perturbation par le module (EM) gestionnaire d'évènements pourra alors consister en une étape de changement (505) des paquets (P) en cours de transmission (T), gérée par un module (SP) planificateur de paquets. Enfin, le module (EM) gestionnaire d'évènements peut également comporter un module (MS) de simulation de mobilité qui permet de simuler le déplacement éventuel, dans la zone de couverture du réseau (RT), d'un terminal (2) mobile communicant responsable de la perturbation. L'étape de définition (50) de la perturbation par le module (EM) gestionnaire d'évènements pourra consister en une étape de simulation (504) de la mobilité du terminal (2) mobile communicant responsable de la perturbation, gérée par le module (MS) de simulation de mobilité. Dans un mode de réalisation, cette étape de simulation (504) de la mobilité du terminal (2) mobile communicant responsable de la perturbation, peut consister en une modélisation d'une vitesse de déplacement du terminal (2) mobile communicant par changement (506) du rapport signal sur bruit requis permettant une modélisation du niveau de pertes ou du gain, du aux variations rapides de la force du signal (« fading ») perçu par les terminaux (2) mobiles communicants. Ce changement du rapport signal sur bruit requis pourra consister, par exemple, en un ajustement (507) de variables aléatoires lors de la modélisation des variations de la force du signal (fading). Dans un autre mode de réalisation, cette étape de simulation (504) de la mobilité du terminal (2) mobile communicant peut consister en un changement (508) de la localisation du terminal (2) mobile communicant dans la carte de répartition (CR), par sélection d'un terminal (2) mobile communicant voisin dans la carte (CR).

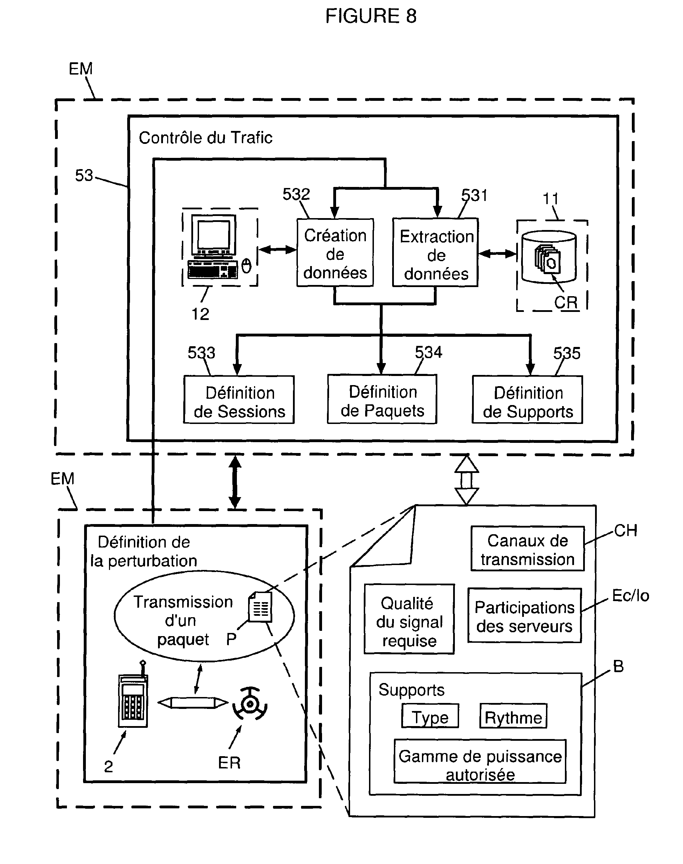

Les étapes de définition (50) de la perturbation et de sélection (52) de la zone simulée (ZS) s'accompagnent d'une étape de contrôle (53) du trafic entre les serveurs (ER) de la zone simulée (ZS) et les terminaux mobiles communicants présents dans la zone simulée (ZS), mise en oeuvre par un module (CT) de contrôle du trafic du système (1) d'optimisation. Cette étape de contrôle (53) du trafic, particulièrement visible sur la figure 8, consiste en une définition d'une pluralité de paramètres relatifs aux services et aux ressources utilisés par les terminaux mobiles communicants présents dans la zone simulée (ZS). Cette définition des paramètres des transmissions (T) en cours par le module (CT) de contrôle du trafic résulte d'au moins une étape d'extraction (531) de données à partir d'une carte (CR) de répartition, pour en extraire les données représentatives des paramètres des transmissions des terminaux mobiles communicants présents dans la zone simulée (ZS). En fonction du mode opératoire choisi par l'utilisateur du système (1) d'optimisation, cette définition pourra également résulter d'une éventuelle étape de création (532) de données représentatives des paramètres de la transmission (T) correspondant à la perturbation. Les paramètres relatifs à la transmission du paquet (P) du terminal (2) mobile requérant peuvent nécessiter au moins une étape de création (532) de données, en fonction des sélections des paramètres de simulation réalisées par l'utilisateur du système (1) d'optimisation. Si l'utilisateur a défini lui-même les paramètres de transmission du paquet (P) du terminal (2) requérant pour réaliser des tests de simulation dans le système (1) d'optimisation, le module (CT) de contrôle du trafic effectue une création (532) de données représentatives des ces paramètres de transmission du paquet (P) et intègrera ces données dans la simulation. Si l'utilisateur a configuré la simulation pour utiliser les paramètres de transmission d'un terminal mobile communicant sélectionné dans la carte (CR) de répartition, le module (CT) de contrôle du trafic effectue une extraction (531) de données représentatives de ces paramètres de transmission du paquet correspondant dans la carte (CR) de répartition. Enfin, si le système (1) d'optimisation est implémenté un serveur (ER) du réseau, grâce à l'exécution de l'application (102) dans l'outil (103) de planification du serveur (ER), les paramètres de transmission réellement requis par le terminal (2) mobile requérant seront utilisés pour cette étape de création (532) de données. Ainsi, le module (CT) de contrôle du trafic permet de définir, pour chacune des transmissions en cours dans la zone simulée (ZS), des sessions de transmission de paquets, des supports (B) de transmission et des canaux (CH) de transmission de ces paquets. L'étape d'extraction (531) de données et l'éventuelle étape de création (532) de données permettent ainsi une étape de définition (533) de sessions correspondant à des transmissions de paquets de données entre les serveurs (ER) de la zone simulée (ZS) et chacun des terminaux mobiles communicants présents. Cette définition des sessions s'accompagne d'une définition (534) des paquets transitant au cours des sessions. Une étape de définition (535) d'au moins un support (B) associé à chacun des terminaux mobiles communicants permet au module (CT) de contrôle du trafic de définir des paramètres tels que le type du support (B), le rythme du support (B) et la gamme de puissances autorisée, mais également de définir la qualité du signal requise pour la transmission et les canaux (CH) de transmission utilisés pour chacune des cellules. Le terme « support » utilisé ici correspond au terme anglais « bearer » définissant une voie de transmission et correspondant à l'ensemble des paramètres utilisés pour la transmission d'un paquet. Ces différents paramètres sont nécessaires aux transmissions de données entre les terminaux mobiles communicants et les serveurs (ER) du réseau de téléphonie mobile. La présente invention permet avantageusement de contrôler ces paramètres et donc de gérer, éventuellement en temps réel, l'exploitation des ressources auxquelles ces différents paramètres se réfèrent.

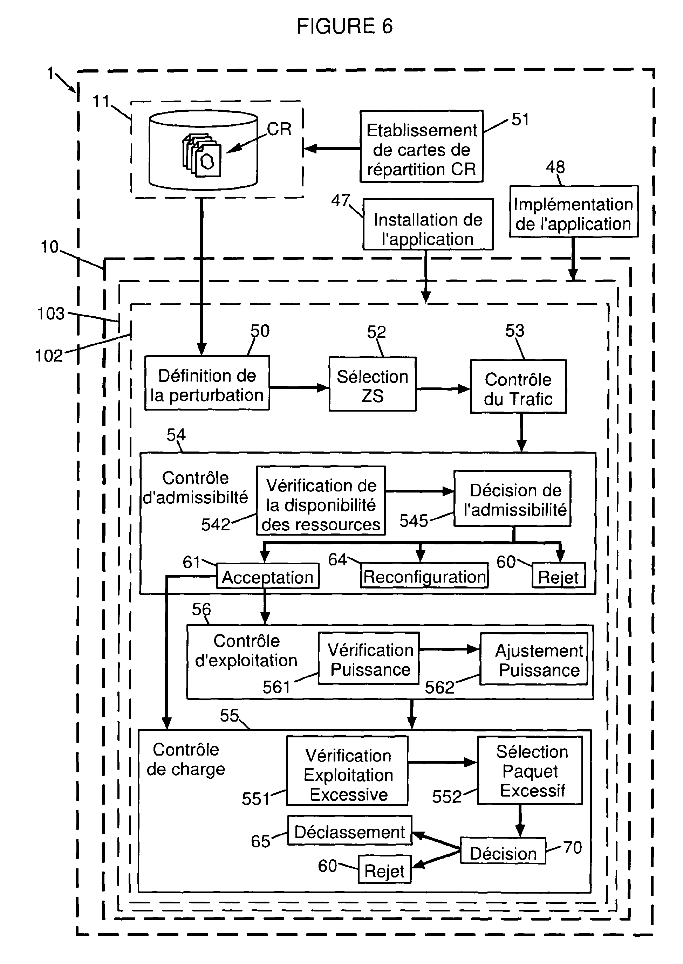

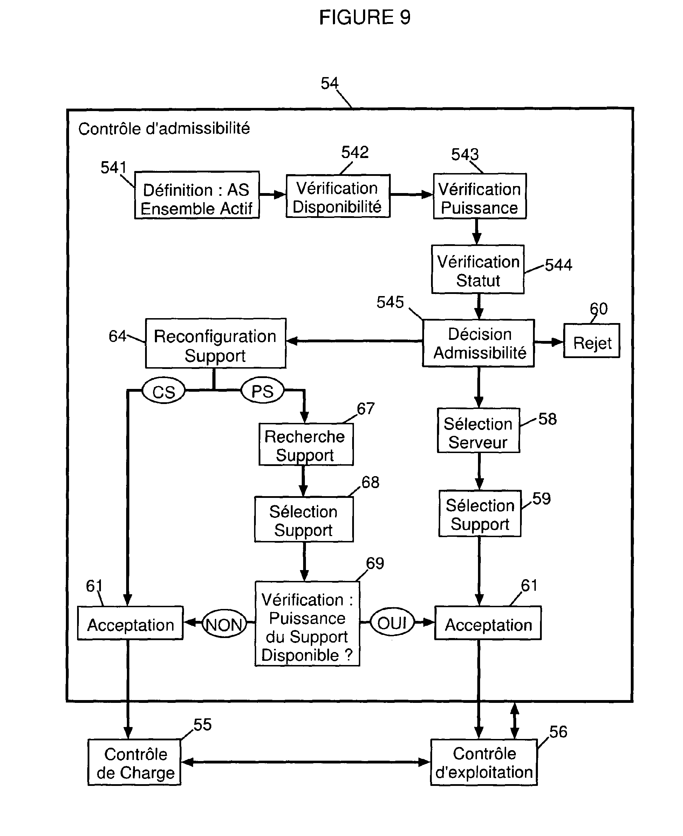

Lorsque la perturbation définie par le module (EM) gestionnaire d'évènements correspond à une requête d'une nouvelle transmission (T) par un terminal mobile (2) communicant, le module (CAC) de contrôle d'admission des appels, utilisant au moins un algorithme de contrôle d'admission préalablement enregistré dans les moyens (11) de mémorisation du système (1), effectue une étape de contrôle (54) de l'admissibilité de la transmission du paquet (P) du terminal (2) mobile requérant, en fonction du trafic dans les différentes cellules de la zone simulée. Cette étape (54), visible parmi les principales étapes représentées sur la figure 6, permet de vérifier (542) la puissance et les canaux disponibles dans la zone simulée (ZS). En fonction du trafic, cette étape permet de décider (545) entre une acceptation (61) de la transmission du paquet (P) si elle peut être acceptée sans nécessiter de changements, une reconfiguration (64) préalable des paramètres de cette transmission si elle nécessite des changements de configuration pour être éventuellement acceptée et un rejet (60) de la transmission si elle ne peut être admise en aucun cas dans la zone simulée (ZS). Cette étape (54) de contrôle d'admission, particulièrement visible sur la figure 9, consiste d'abord en une définition (541) d'un ensemble (AS) actif, de cellules disponibles au sein de la zone simulée (ZS). Cet ensemble (AS) actif consiste en l'ensemble des liens disponibles au sein du réseau (RT) pour la transmission du paquet (P). Un exemple d'ensemble actif (AS) est symbolisé par des traits gras pointillés dans la carte (CR) de répartition représentée sur la figure 3. Dans l'exemple de la figure 3, l'ensemble actif (AS) comporte, parmi les cellules de la zone simulée, seulement les cellules des deux serveurs (ER) les plus proches du terminal (2) requérant, par exemple à cause du fait que les deux autres serveurs de la zone simulée (ZS) ne peuvent pas augmenter suffisamment leur puissance pour couvrir correctement l'emplacement du terminal (2) requérant et offrir l'ensemble des prestations proposées normalement par le réseau (RT). La définition (541) de l'ensemble (AS) actif de cellules disponibles pour la transmission du paquet (P) du terminal (2) requérant est effectuée par le module (CAC) de contrôle d'admission, grâce à une mesure et un classement des serveurs (ER) de la zone simulée (ZS) en fonction de leur participation (Ec/lo) à la puissance totale des signaux échangés avec le terminal (2) requérant. Le nombre de serveurs (ER) ainsi sélectionnés dans l'ensemble actif (AS) dépend de l'étape de définition (50) précédemment décrite et donc de la localisation du terminal (2) requérant, mais également du type de terminal (2) requérant considéré car les différents terminaux mobiles communicants connus acceptent des listes de serveurs plus ou moins grandes pour leur ensemble actif. Une fois cet ensemble actif défini, le module (CAC) de contrôle d'admission effectue une vérification (542) de la disponibilité de ressources, en canaux et en puissance, pour chacune des cellules de cet ensemble actif (AS). Une définition de la puissance requise par les canaux de transmission du paquet (P) pour chacune des cellules permet alors une vérification (543) que cette puissance requise par chacune des cellules n'excède pas la puissance maximum du support (B) définie pour la transmission du paquet (P) du terminal (2) requérant. Ensuite, une étape de vérification (544) que le statut d'au moins une des cellules autorise l'admission de transmissions de données par un nouveau terminal mobile communicant permet au module (CAC) de contrôle d'admission, d'effectuer une étape de décision (545) de l'admissibilité de la transmission du paquet (P) du terminal (2) mobile requérant. Cette décision (545) consiste, comme mentionné précédemment, en un choix parmi trois possibilités en fonction des conditions nécessaires à l'admission d'une nouvelle transmission, définies dans l'algorithme de contrôle d'admission. Une acceptation (61) de la transmission du paquet (P) du terminal (2) requérant sera décidée lorsque les conditions nécessaires pour l'admission d'une nouvelle transmission sont remplies. Cette acceptation (61) nécessite alors une sélection (58) d'un serveur (ER) pour la transmission du paquet (P) et une sélection (59) d'un support (B) à utiliser pour cette transmission. Une reconfiguration (64) de la transmission du paquet (P) sera décidée lorsque les conditions nécessaires pour l'admission d'une nouvelle transmission ne sont pas remplies. Les moyens (11) de mémorisation du système (1) d'optimisation peuvent stocker au moins un algorithme de reconfiguration, utilisé par le module (CAC) de contrôle d'admission, pour permettre une modification des données relatives au support (B) du paquet (P) et augmenter les chances d'admission de sa transmission. Ainsi le système d'optimisation permet un partage équitable des ressources exploitées par les terminaux mobiles communicants présents dans la zone simulée (ZS). Cependant, si le trafic au sein de la zone simulée (ZS) ne permet pas une reconfiguration (64) efficace de la transmission du paquet (P), la transmission du paquet (P) sera rejetée (60) par le module (CAC) de contrôle d'admission. De même, si les moyens (11) de mémorisation du système (1) d'optimisation ne stockent pas d'algorithme de reconfiguration ou que l'utilisateur a configuré le système (1) pour ne pas l'utiliser, un rejet (60) de la transmission du paquet (P) du terminal (2) mobile requérant sera automatiquement décidé dès que les conditions nécessaires à l'admission ne sont pas remplies.

L'étape de reconfiguration (64) de la transmission du paquet (P), lorsque les conditions nécessaires pour l'admission d'une nouvelle transmission, définies par l'algorithme de contrôle d'admissibilité, n'ont pas été remplies, consiste en l'utilisation d'au moins un algorithme de reconfiguration par le module (CAC) de contrôle d'admission. Cette étape de reconfiguration (64) dépend du type d'aiguillage utilisé pour la transmission du paquet (P). Si le paquet est aiguillé par circuits, c'est-à-dire qu'il est de type « aiguillé par circuit » (« circuit switched », en anglais), cette étape de reconfiguration (64) résulte en l'acceptation (61) de la transmission du paquet (P) par le serveur (ER) de l'ensemble actif (AS) possédant la meilleure participation (Ec/lo) à la puissance du signal, suivie d'une étape de contrôle (55) de charge par le module (LC) de contrôle de charge. Si le paquet est aiguillé par paquets, c'est-à-dire qu'il est de type « aiguillé par paquet » (« packet switched », en anglais), cette étape de reconfiguration (64) nécessite d'abord une recherche (67) d'un support (B) pour lequel la puissance requise est compatible avec la gamme de puissance d'au moins un canal (CH) d'une des cellules de l'ensemble actif (AS). Si un tel support (B) n'est pas disponible, la transmission du paquet (P) est rejetée (60). Si un tel support (B) existe dans la zone simulée (ZS), le module (CAC) de contrôle d'admission effectue une sélection (68) de ce support (B), puis une vérification (69) de la disponibilité de la puissance requise par le support (B) sélectionné dans au moins une des cellules de l'ensemble actif (AS). Si ces conditions sont remplies, la transmission du paquet (P) est acceptée (61) dans la cellule du serveur possédant la puissance requise disponible. Si la puissance requise par le support (B) n'est disponible dans aucune cellule de l'ensemble actif (AS), le serveur (ER) possédant la meilleure participation (Ec/lo) à la puissance du signal est sélectionné dans l'ensemble actif (AS) pour l'acceptation (61) de la transmission du paquet (P). Suite à cette acceptation (61) de la transmission du paquet (P) dans une cellule ne possédant pas la puissance requise, le module (CAC) de contrôle d'admission active directement le module (LC) de contrôle de charge pour qu'il effectue une étape de contrôle (55) de la charge des cellules de la zone simulée (ZS). Cette étape de contrôle (55) de charge permet de reconfigurer les transmissions en cours dans la zone simulée (ZS) puis de réaliser une étape de contrôle (56) de puissance pour ajuster les puissances exploitées sur les différents serveurs (ER) de la zone simulée (ZS). Ainsi, en cas de surexploitation des ressources, le module (CL) de contrôle d'exploitation effectuera un parcours des différentes cellules de la zone simulée (ZS) afin de faire converger à nouveau les différents serveurs (ER) de la zone simulée (ZS) vers un état stable, en régulant la charge des serveurs et la puissance utilisée.

L'étape de contrôle (55) de charge de chacune des cellules de la zone simulée (ZS) peut donc être mise en oeuvre par le module (LC) de contrôle de charge lorsqu'il est activé directement par le module (CAC) de contrôle d'admission, mais d'une manière générale, le module (LC) de contrôle de charge est activé pour toute variation du nombre de paquets transmis au sein de la zone simulée (ZS). Ainsi le module (LC) de contrôle de charge peut être activé automatiquement lorsque l'utilisation des ressources d'une cellule est en-dessous d'un seuil minimum ou au-dessus d'un seuil maximum. Cette étape de contrôle (55) de charge permet d'améliorer la qualité de la transmission des paquets des différents terminaux mobiles communicants présents dans les différentes cellules. Par exemple, le module (LC) de contrôle de charge peut être activé par le module (CAC) de contrôle d'admission pour ajuster les transmissions dans la cellule dans laquelle la transmission du paquet (P) du terminal (2) mobile requérant a été acceptée. Le module (LC) de contrôle de charge peut également être activé par le module (CL) de contrôle d'exploitation pour améliorer les transmission dans les cellules couvertes par les serveurs (ER) dont les ressources sont utilisées de manière excessive, lorsque le module (CL) de contrôle d'exploitation détecte une utilisation et qu'il ne peut pas l'ajuster à cause des configurations sélectionnées pour les transmissions des différents paquets des différents terminaux mobiles communicants. Le module (CL) de contrôle d'exploitation du système (1) d'optimisation met en oeuvre une étape de contrôle (56) de puissance lors d'une variation du nombre de paquets transmis au sein de la zone simulée (ZS). Ce module (CL) de contrôle d'exploitation est activé par le module (CAC) de contrôle d'admission des appels lors de l'acceptation d'une nouvelle transmission d'un paquet (P) d'un terminal (2) requérant ou par le module (LC) de contrôle de charge soit lorsque ce dernier a réorganisé les transmissions comme expliqué ci-après, suite à l'arrêt d'une transmission par un terminal mobile communicant ou à l'abandon d'un paquet d'une transmission. L'étape de contrôle (56) de puissance mise en oeuvre par le module (CL) de contrôle d'exploitation consiste en une vérification (561) de la puissance utilisée par les terminaux mobiles communicants dans les cellules constituant la zone simulée (ZS), puis un ajustement (562) de la puissance d'au moins un serveur (ER) couvrant au moins une cellule de la zone simulée (ZS).

L'étape de contrôle (55) de charge de chacune des cellules de la zone simulée (ZS) peut être mise en oeuvre par activation automatique du module (LC) de contrôle de charge, lorsque la puissance requise par un canal (CH) de transmission d'un paquet augmente au-delà d'un maximum autorisé. Dans ce cas, cette étape (55) consiste en une sélection (552) automatique de ce paquet comme paquet excessif puis un déclassement (65) des paramètres de transmission de ce paquet excessif sélectionné. D'une manière générale, l'étape de contrôle (55) de charge est mise en oeuvre lors d'une utilisation excessive des ressources d'au moins un serveur (ER) de la zone simulée (ZS). Le module (LC) de contrôle de charge du système (1) d'optimisation effectue alors, grâce à l'utilisation d'au moins un algorithme de contrôle de charge préalablement enregistré dans les moyens (11) de mémorisation du système (1) d'optimisation, une vérification (551) des ressources exploitées, en puissance et en canaux, dans les cellules constituant la zone simulée (ZS), pour sélectionner au moins un serveur (ER) dont les ressources sont exploitées de manière excessive. Les paquets sont définis comme excessifs lorsqu'ils utilisent le maximum de puissance disponible ou qu'ils utilisent un débit maximum sur les canaux de transmission entre les terminaux mobiles communicants présents et les serveurs (ER). Le module (LC) de contrôle de charge effectue alors une sélection (552) d'au moins un paquet parmi les paquets excessifs, puis une décision (70) entre un rejet (60) du paquet excessif sélectionné et un déclassement (65) des paramètres de transmission du paquet excessif sélectionné. Cette décision (70) dépend de l'algorithme de contrôle de charge utilisé par le module (LC) de contrôle de charge et comporte une suite de vérifications préalables permettant de réorganiser les transmissions des paquets en fonction de leurs paramètres dont l'algorithme de contrôle permet d'établir une hiérarchie de priorité des différents paquets. Les vérifications nécessaires à l'étape de décision (70) sur la transmission du paquet excessif sélectionné consiste en une vérification (71) du type d'aiguillage, par circuit (CS) ou par paquet (PS), utilisé par le paquet excessif sélectionné, une vérification (72) des paramètres du support (B) utilisé par le paquet excessif sélectionné et une vérification (73) du type de liens établis entre le terminal mobile communicant transmettant le paquet excessif sélectionné et son serveur (ER) de la zone simulée (ZS). Cette vérification (73) du type de liens établis permet de déterminer si ces liens permettent une bascule (SHO) automatique du paquet excessif sélectionné d'une cellule à l'autre de la zone simulée (ZS) lorsque la puissance du signal fourni par un serveur (ER) n'est pas suffisante.

L'étape de déclassement (65) des paramètres de transmission des paquets excessifs sélectionnés comporte plusieurs étapes de sélection des paquets selon l'ordre de priorité défini dans l'algorithme de contrôle de charge. Le module (LC) de contrôle de charge recherche d'abord, parmi les paquets excessifs sélectionnés, au moins un paquet (PS-nonSHO) utilisant un aiguillage (PS) par paquets et dont les liens ne permettent pas une bascule (SHO) automatique du paquet d'une cellule à l'autre. Une sélection (74) de ce paquet (PS-nonSHO) permet une diminution (741) d'une valeur d'au moins un paramètre du support (B) de ce paquet pour améliorer la qualité de la transmission de l'ensemble des paquets dans la zone simulée. Si aucun paquet ne satisfait ces critères ou si une telle diminution (741) est impossible sans aboutir à un rejet (60) de ce paquet, le module (LC) de contrôle de charge effectue une sélection (75) d'au moins un paquet (PS-SHO) utilisant un aiguillage (PS) par paquets et dont les liens permettent une bascule (SHO) automatique du paquet d'une cellule à l'autre. Ensuite, une stratégie de contrôle de bascule définie dans l'algorithme de contrôle de charge permet au module (LC) de prendre une décision (751) entre une diminution (741) d'une valeur d'au moins un paramètre du support (B) de ce paquet et un abandon (742) du lien permettant la bascule (SHO) automatique de ce paquet. Si aucun paquet (PS-SHO) n'a pu être sélectionné à cette précédente étape (75), le module (LC) de contrôle de charge effectue une sélection (76) d'au moins un paquet (CS-SHO) utilisant un aiguillage (CS) par circuits et dont les liens permettent une bascule (SHO) automatique du paquet d'une cellule à l'autre. Si un tel un paquet (CS-SHO) est trouvé, le module (LC) poursuit par une étape d'abandon (742) du lien permettant la bascule (SHO) automatique de ce paquet (CS-SHO), mais si aucun paquet de ce type n'est trouvé, une étape de sélection (77) d'au moins un paquet (CS-nonSHO) utilisant un aiguillage (CS) par circuits et dont les liens ne permettent pas une bascule (SHO) automatique du paquet d'une cellule à l'autre, suivie d'un rejet (60) de ce paquet (CS-nonSHO) permet l'amélioration de la qualité de la transmission des autres paquets de la zone simulée (ZS).

Comme mentionné précédemment, le module (LC) de contrôle de charge du système (1) d'optimisation peut être activé automatiquement lors d'une diminution de l'utilisation des ressources d'au moins un serveur (ER) de la zone simulée (ZS). L'étape de contrôle (55) de charge comporte alors une étape de vérification (551) des ressources exploitées, en puissance et en canaux, dans la zone simulée (ZS), pour détecter au moins un serveur (ER) possédant des ressources inexploitées. Ensuite, parmi les paquets, dits défavorisés, utilisant un débit minimum sur les canaux de transmission du serveur (ER) sélectionné comme possédant des ressources inexploitées, le module (LC) effectue une sélection (552) d'au moins un paquet, suivie d'un surclassement (66) des paramètres de transmission de ce paquet défavorisé. Ce surclassement (66) consiste en une augmentation (661) d'une valeur d'au moins un paramètre du support (B) utilisé par ce paquet défavorisé sélectionné, jusqu'à atteindre un niveau d'exploitation satisfaisant, défini dans l'algorithme de contrôle de charge. Dans ce mode de réalisation où le module (LC) de contrôle de charge intègre un algorithme d'augmentation de l'exploitation des ressources lorsqu'elles sont sous-exploitées, l'étape de contrôle (55) de charge est associée à une étape de détection d'éventuelles oscillations entre deux valeurs d'au moins un paramètre du support (B) utilisé par un paquet (P) en cours de reconfiguration par le module (LC) de contrôle de charge. En effet, l'augmentation et la diminution possibles des paramètres de la transmission (T) par le module (LC) de contrôle de charge sont antagonistes et peuvent engendrer une oscillation de ce paramètre entre deux valeurs induisant chacune un de ces deux types de régulation. Une étape de détection d'une oscillation due à ces deux étapes antagonistes permet d'arrêter l'oscillation, par exemple grâce à une attribution à ce paramètre de la valeur minimum atteinte par l'oscillation.

On comprend ainsi que l'on a atteint les buts fixés par l'invention qui permet efficacement le contrôle de l'ensemble des ressources du réseau de téléphonie et permet une surveillance de la qualité des transmissions de données effectuées par les terminaux mobiles communicants au sein du réseau. L'invention permet bien évidemment un enregistrement de l'ensemble des opérations effectuées et des transmissions obtenues par les différents terminaux mobiles communicants, avec éventuellement un affichage de résultats de simulation et/ou d'optimisation des ressources, tels que le débit moyen délivré aux terminaux mobiles communicants ou la qualité moyenne du signal au cours des transmissions, par exemple.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de simulation et d'optimisation de l'exploitation des ressources disponibles dans une zone de couverture d'un réseau (RT) de téléphonie mobile consistant en un ensemble de zones d'influence, dites cellules, d'une pluralité d'émetteurs/récepteurs (ER), dits serveurs, dont l'exploitation des ressources dépend des transmissions (T) d'ensembles de données, dits paquets (P), requises par au moins un terminal (2) mobile communicant, dit requérant, présent dans leur zone d'influence, **caractérisé**, d'une part, en ce qu'il est mis en oeuvre par des moyens (10) de traitement d'au moins un système (1) d'optimisation de ressources et, d'autre part, en ce qu'il comporte les étapes suivantes :
- définition (50), par un module (EM) gestionnaire d'évènements du système (1) d'optimisation, d'une variation, dite perturbation, d'au moins une transmission (T) de paquet (P) requise au sein du réseau (RT), la perturbation étant définie à partir d'au moins une carte (CR) de répartition statistique stockée dans des moyens (11) de mémorisation du système (1) d'optimisation et comportant des données représentatives de transmissions (T) de paquets (P) de données d'une pluralité de terminaux mobiles communicants présents dans une zone géographique déterminée pendant une tranche horaire déterminée,
- sélection (52) d'un ensemble de cellules comportant au moins la cellule dans laquelle la perturbation a lieu et définissant une zone simulée (ZS) au sein de la carte (CR) de répartition, par un module (CL) de contrôle d'exploitation des ressources, puis utilisation d'un algorithme de parcours, par le module (CL) de contrôle d'exploitation, pour définir un chemin de parcours (CP) de la zone simulée (ZS) et optimiser successivement les ressources des serveurs (ER) couvrant les cellules successives du chemin de parcours (CP).

2. Procédé selon la revendication 1, **caractérisé en ce qu'**il comporte une étape préalable d'établissement (51) d'au moins une carte (CR) de répartition comportant des données représentatives du trafic et de la localisation des serveurs (ER) dans la zone de couverture du réseau (RT), ces données représentatives du trafic correspondant à des mesures quantitatives et qualitatives de la localisation d'une pluralité de terminaux mobiles communicants et de serveurs opérant dans la zone de couverture du réseau (RT) et des transmissions (T) de paquets (P) de données effectuées au cours de tranches horaires choisies pour leur significativité statistique, les données correspondant à ces mesures étant enregistrées dans les moyens (11) de mémorisation du système (1) d'optimisation.

3. Procédé selon la revendication 1, **caractérisé en ce qu'**il comporte une étape d'établissement (51) d'au moins une carte (CR) de répartition comportant des données représentatives du trafic et de la localisation des serveurs dans la zone de couverture du réseau (RT), les données représentatives du trafic étant générées par le module (EM) gestionnaire d'évènements et représentant, d'une part, la localisation d'une pluralité de terminaux mobiles communicants distribués aléatoirement dans la zone de couverture du réseau (RT) selon une densité prédéterminée et, d'autre part, les transmissions (T) de paquets (P) de données requises par ces terminaux assignées aléatoirement aux différents terminaux présents dans le réseau (RT), à partir de lois aléatoires stockées dans les moyens (11) de mémorisation du système (1) d'optimisation.

4. Procédé selon une des revendications 1 à 3, **caractérisé en ce qu'**il comporte une étape d'enregistrement dans les moyens (11) de mémorisation du système (1) d'optimisation d'au moins un algorithme de parcours permettant au module (CL) de contrôle d'exploitation de définir un chemin de parcours (CP) consistant en une sélection d'une cellule quelconque de la zone simulée (ZS) puis en une pluralité d'itérations d'une sélection d'une cellule adjacente à la cellule sélectionnée précédemment, jusqu'à ce que toutes les cellules de la zone simulée (ZS) aient été successivement sélectionnées dans un ordre croissant en fonction de leur distance par rapport à la première cellule sélectionnée.

5. Procédé selon une des revendications 1 à 3, **caractérisé en ce qu'**il comporte une étape d'enregistrement dans les moyens (11) de mémorisation du système (1) d'optimisation d'au moins un algorithme de parcours définissant des cercles concentriques centrés autour de la cellule dans laquelle a lieu la perturbation et permettant au module (CL) de contrôle d'exploitation de définir un chemin de parcours (CP) consistant en des sélections successives des cellules de la zone simulée (ZS) par lesquelles passent ces cercles concentriques dans un ordre croissant en fonction de la distance de ces cellules par rapport à la première cellule sélectionnée.

6. Procédé selon une des revendications 1 à 5, **caractérisé en ce que** l'étape d'utilisation de l'algorithme de parcours par le module (CL) de contrôle d'exploitation s'accompagne d'une étape de création de données représentatives d'une grille de découpage de la zone simulée (ZS) en divisions (D) comportant chacune un index obtenu à partir des coordonnées des cellules et permettant de localiser chacune des divisions et de les classer dans un ordre croissant en fonction de leur distance par rapport à une division centrale.

7. Procédé selon la revendication 6, **caractérisé en ce que** l'étape d'utilisation, par le module (CL) de contrôle d'exploitation, d'un algorithme de parcours résulte en une définition de cercles concentriques centrés autour de la cellule dans laquelle a lieu la perturbation et s'accompagne d'une étape de définition d'un chemin de parcours (CP) comportant au moins un vecteur indiquant le trajet à parcourir d'une division (D) à l'autre au sein de la zone simulée (ZS), pour permettre des sélections successives des divisions (D) de la zone simulée (ZS) par lesquelles passent ces cercles concentriques et des sélections successives des cellules contenues dans chacune de ces divisions (D) dans un ordre croissant en fonction de leur distance par rapport à une division centrale.

8. Procédé selon une des revendications 6 et 7, **caractérisé en ce que** les données représentatives de la grille de découpage de la zone simulée (ZS) en divisions (D) comportent des données représentatives des coordonnées de la division permettant au module (CL) de contrôle d'exploitation de déterminer la localisation des cellules ainsi que des divisions (D) et cellules voisines.

9. Procédé selon une des revendications 1 à 5, **caractérisé en ce que** l'étape d'utilisation de l'algorithme de parcours par le module (CL) de contrôle d'exploitation s'accompagne d'une étape de création, pour chaque cellule de la zone simulée (ZS), de données représentatives des cellules voisines dans la zone simulée (ZS), de façon à définir un chemin de parcours (CP) de chacune des cellules les unes après les autres.

10. Procédé selon la revendication 9, **caractérisé en ce que** le chemin de parcours des cellules au sein d'une division (D) est déterminé de façon aléatoire.

11. Procédé selon une des revendications 1 à 10, **caractérisé en ce que** l'étape d'utilisation de l'algorithme de parcours par le module (CL) de contrôle d'exploitation s'accompagne d'une création, pour chaque cellule de la zone simulée (ZS), de données représentatives d'un marqueur indiquant les cellules déjà parcourues pendant le parcours de la zone simulée par le module (CL) de contrôle d'exploitation.

12. Procédé selon une des revendications 1 à 11, **caractérisé en ce que** l'étape de définition (50) de la perturbation consiste en une sélection aléatoire et automatique d'un terminal (2) mobile communicant dans une carte (CR) de répartition extraite des moyens (11) de mémorisation du système (1) d'optimisation et **en ce que** l'étape (52) de sélection d'un ensemble de cellules définissant une zone simulée (ZS) au sein de la carte (CR) de répartition consiste en une sélection d'au moins un serveur (ER) dont la cellule peut couvrir l'emplacement auquel se trouve ce terminal dans la carte (CR) de répartition.

13. Procédé selon une des revendications 1 à 11, **caractérisé en ce que** les étapes de définition (50) de la perturbation et de sélection (52) d'un ensemble de cellules définissant une zone simulée (ZS) au sein de la carte (CR) de répartition consistent en une sélection d'un terminal (2) mobile communicant présent dans la zone de couverture du réseau (RT) et d'au moins les serveurs (ER) dont les cellules peuvent couvrir l'emplacement auquel se trouve ce terminal dans la carte (CR) de répartition, à partir d'informations saisies et enregistrées par un utilisateur système (1) d'optimisation de ressources, grâce à des moyens interactifs (12) entre l'utilisateur et le système (1) d'optimisation de ressources.

14. Procédé selon une des revendications 1 à 11, **caractérisé**, d'une part, en ce que l'étape de définition (50) de la perturbation est mise en oeuvre lors d'une requête de transmission (T) d'un paquet (P) de données par un terminal (2) mobile requérant présent dans la zone de couverture d'un réseau (RT) de téléphonie mobile opérationnel et consiste en une localisation du terminal (2) mobile communicant requérant dans la zone de couverture du réseau (RT) et une identification du type de transmission (T) qu'il requiert et, d'autre part, en ce que l'étape (52) de sélection d'un ensemble de cellules définissant une zone simulée (ZS) au sein de la carte (CR) de répartition consiste en une sélection d'au moins un serveur (ER) dont la cellule peut couvrir l'emplacement auquel se trouve ce terminal (2) dans la carte (CR) de répartition.

15. Procédé selon une des revendications 1 à 14, **caractérisé en ce que** l'étape de définition (50) de la perturbation par le module (EM) gestionnaire d'évènements comporte au moins une des étapes suivantes :
- requête (501) d'une nouvelle transmission (T), gérée par un module (TE) de contrôle des évènements,
- fin (502) d'une transmission (T), gérée par le module (TE) de contrôle des évènements,
- expiration (503) d'un délai de transmission (T), gérée par le module (TE) de contrôle des évènements,
- simulation (504) de la mobilité du terminal (2) mobile communicant responsable de la perturbation, gérée par un module (MS) de simulation de mobilité,
- changement (505) des transmissions (T) de paquets (P) en cours, gérée par un module (SP) planificateur de paquets.

16. Procédé selon la revendication 15, **caractérisé en ce que** l'étape de simulation (504) de la mobilité du terminal (2) mobile communicant responsable de la perturbation consiste en l'une des étapes suivantes :
- modélisation d'une vitesse de déplacement du terminal (2) mobile communicant par changement (506) du rapport signal sur bruit et modélisation du niveau de pertes dues à la propagation par ajustement (507) de variables aléatoires, ou
- changement (508) de la localisation du terminal (2) mobile communicant dans la carte de répartition (CR) par sélection d'un terminal (2) mobile communicant voisin dans la carte (CR).

17. Procédé selon une des revendications 1 à 16, **caractérisé en ce qu'**il comporte une étape de contrôle (53) du trafic entre les serveurs (ER) de la zone simulée (ZS) et les terminaux mobiles communicants présents dans la zone simulée (ZS), mise en oeuvre par un module (CT) de contrôle du trafic du système (1) d'optimisation définissant, pour chacune des transmissions (T) en cours, des sessions de transmission (T) de paquets (P), des supports (B) de transmission et des canaux (CH) de transmission de ces paquets (P).

18. Procédé selon la revendication 17, **caractérisé en ce que** l'étape de contrôle (53) du trafic par le module (CT) de contrôle du trafic du système (1) d'optimisation consiste en une définition d'une pluralité de paramètres relatifs aux services et aux ressources utilisés par les terminaux mobiles communicants présents dans la zone simulée (ZS), cette définition résultant d'au moins une étape d'extraction (531) de données représentatives de ces paramètres, à partir d'une carte (CR) de répartition, et d'une éventuelle étape de création (532) de données représentatives de ces paramètres, à partir d'informations saisie par un utilisateur du système (1) d'optimisation, de façon à permettre au moins une des étapes suivantes :
- définition (533) de sessions correspondant à des transmissions (T) de paquets de données entre les serveurs (ER) de la zone simulée (ZS) et chacun des terminaux mobiles communicants présents, avec définition (534) des paquets (P) transitant au cours des sessions ;
- définition (535) d'au moins un support (B) associé à chacune des transmissions (T) de chacun des terminaux mobiles communicants, avec définition d'au moins un paramètre parmi des paramètres relatifs au type du support (B), au rythme du support (B), à la qualité du signal requise, aux canaux (CH) de transmission utilisés pour chacune des cellules et à la gamme de puissances autorisée.

19. Procédé selon une des revendications 1 à 18, **caractérisé en ce qu'**il comporte une étape de contrôle (54) de l'admissibilité de la transmission (T) de ce paquet (P), par un module (CAC) de contrôle d'admission des appels du système (1) d'optimisation de ressources réalisant une définition (541) d'un ensemble (AS), dit ensemble actif, de cellules disponibles au sein de la zone simulée (ZS), par vérification (542) de la puissance et des canaux disponibles dans la zone simulée (ZS), puis effectuant une décision (545), en fonction du trafic, de l'admissibilité de la transmission (T) de ce paquet (P) grâce à au moins une voie de transmission, dite support (B), et au moins un canal (CH) de transmission du paquet (P) via au moins un serveur (ER) couvrant une des cellules de l'ensemble actif (AS).

20. Procédé selon une des revendications 1 à 19, **caractérisé en ce qu'**il comporte une étape de contrôle (56) d'exploitation, mise en oeuvre par un module (CL) de contrôle d'exploitation du système (1) d'optimisation lors d'une variation du nombre de paquets (P) transmis au sein de la zone simulée (ZS) et consistant en une vérification (561) de la puissance utilisée par les terminaux mobiles communicants dans les cellules constituant la zone simulée (ZS), puis ajustement (562) de la puissance d'au moins un serveur (ER) couvrant au moins une cellule de la zone simulée (ZS).

21. Procédé selon une des revendications 1 à 20, **caractérisé en ce qu'**il comporte une étape de contrôle (55) de charge pour chacune des cellules de la zone simulée (ZS), mise en oeuvre par un module (LC) de contrôle de charge du système (1) d'optimisation, lors d'une utilisation excessive des ressources d'au moins un serveur (ER) de la zone simulée (ZS), consistant en l'utilisation d'au moins un algorithme de contrôle de charge préalablement enregistré dans les moyens (11) de mémorisation du système (1) d'optimisation, et comportant les étapes suivantes :
- vérification (551) des ressources exploitées, en puissance et en canaux, dans les cellules constituant la zone simulée (ZS), pour sélectionner au moins un serveur (ER) dont les ressources sont exploitées de manière excessive ;
- sélection (552) d'au moins un paquet parmi les paquets, dits paquets excessifs, utilisant le maximum de puissance ou utilisant un débit maximum sur les canaux de transmission entre les terminaux mobiles communicants présents et le serveur (ER) dont les ressources sont exploitées de manière excessive ;
- décision (70) entre un rejet (60) du paquet excessif sélectionné et un déclassement (65) des paramètres de transmission du paquet excessif sélectionné.

22. Procédé selon la revendication 21, **caractérisé en ce que** l'étape de décision (70) entre un rejet (60) du paquet excessif sélectionné et un déclassement (65) des paramètres de transmission du paquet excessif sélectionné, lors du contrôle (55) de charge par le module (LC) de contrôle de charge, dépend de l'algorithme de contrôle de charge utilisé et comporte les étapes suivantes :
- vérification (71) du type d'aiguillage, par circuit ou par paquet, utilisé par le paquet excessif sélectionné ;
- vérification (72) des paramètres du support (B) utilisé par le paquet excessif sélectionné ;
- vérification (73) du type de liens établis entre le terminal mobile communicant transmettant le paquet excessif sélectionné et son serveur (ER) de la zone simulée (ZS), pour déterminer si ces liens permettent une bascule (SHO) automatique du paquet excessif sélectionné d'une cellule à l'autre de la zone simulée (ZS) lorsque la puissance du signal fourni par un serveur (ER) n'est pas suffisante.

23. Procédé selon la revendication 22, **caractérisé en ce que** l'étape de déclassement (65) des paramètres de transmission du paquet excessif sélectionné comporte les étapes suivantes :
- sélection (74), parmi les paquets excessifs sélectionnés, d'au moins un paquet (PS-nonSHO) utilisant un aiguillage (PS) par paquets et dont les liens ne permettent pas une bascule (SHO) automatique du paquet d'une cellule à l'autre, puis diminution (741) d'une valeur d'au moins un paramètre du support (B) de ce paquet ou itération de l'étape suivante si aucun paquet ne satisfait ces critères ou si une telle diminution (741) est impossible sans aboutir à un rejet (60) de ce paquet;
- sélection (75), parmi les paquets excessifs sélectionnés, d'au moins un paquet (PS-SHO) utilisant un aiguillage (PS) par paquets et dont les liens permettent une bascule (SHO) automatique du paquet d'une cellule à l'autre, puis décision (751) entre soit une itération de l'étape suivante si aucun paquet ne satisfait ces critères, soit une diminution (741) d'une valeur d'au moins un paramètre du support (B) de ce paquet, soit un abandon (742) du lien permettant la bascule (SHO) automatique de ce paquet, en fonction d'une stratégie de contrôle de bascule définie dans l'algorithme de contrôle de charge, ou en fonction de l'impossibilité de la diminution (741) d'une valeur d'au moins un paramètre du support (B);
- sélection (76), parmi les paquets excessifs sélectionnés, d'au moins un paquet (CS-SHO) utilisant un aiguillage (CS) par circuits et dont les liens permettent une bascule (SHO) automatique du paquet d'une cellule à l'autre, puis abandon (742) du lien permettant la bascule (SHO) automatique de ce paquet ou itération de l'étape suivante si aucun paquet ne satisfait ces critères;
- sélection (77), parmi les paquets excessifs sélectionnés, d'au moins un paquet (CS-nonSHO) utilisant un aiguillage (CS) par circuits et dont les liens ne permettent pas une bascule (SHO) automatique du paquet d'une cellule à l'autre, puis rejet (60) de ce paquet.

24. Procédé selon une des revendications 1 à 23, **caractérisé en ce qu'**il comporte une étape de contrôle (55) de charge pour chacune des cellules de la zone simulée (ZS), mise en oeuvre par un module (LC) de contrôle de charge du système (1) d'optimisation, lors d'une diminution de l'utilisation des ressources d'au moins un serveur (ER) de la zone simulée (ZS), consistant en l'utilisation d'au moins un algorithme de contrôle de charge préalablement enregistré dans les moyens (11) de mémorisation du système (1) d'optimisation, et comportant les étapes suivantes :
- vérification (551) des ressources exploitées, en puissance et en canaux, dans la zone simulée (ZS), pour détecter au moins un serveur (ER) possédant des ressources inexploitées ;
- sélection (552) d'au moins un paquet parmi les paquets, dits défavorisés, utilisant un débit minimum sur les canaux de transmission du serveur (ER) possédant des ressources inexploitées ;
- surclassement (66) des paramètres de transmission du paquet défavorisé sélectionné, par augmentation (661) d'une valeur d'au moins un paramètre du support (B) utilisé par ce paquet défavorisé sélectionné jusqu'à atteindre un niveau d'exploitation satisfaisant, défini dans l'algorithme de contrôle de charge.

25. Procédé selon la revendication 24, **caractérisé en ce que** l'étape de contrôle (55) de charge de chacune des cellules de la zone simulée (ZS) est associée à une étape de détection d'éventuelles oscillations entre deux valeurs d'au moins un paramètre du support (B) utilisé par un paquet (P) en cours de reconfiguration par le module (LC) de contrôle de charge et, le cas échéant, d'une attribution de la valeur minimum atteinte par l'oscillation à ce paramètre.

26. Procédé selon une des revendications 21 à 25, **caractérisé en ce que** l'étape de contrôle (55) de charge de chacune des cellules de la zone simulée (ZS) est mise en oeuvre par activation du module (LC) de contrôle de charge par le module (CL) de contrôle d'exploitation, pour améliorer la qualité de la transmission (T) des paquets (P) des différents terminaux mobiles communicants présents dans au moins une cellule dans laquelle a lieu la perturbation définie par le module (EM) gestionnaire d'évènements.

27. Procédé selon une des revendications 21 à 25, **caractérisé en ce que** l'étape de contrôle (55) de charge de chacune des cellules de la zone simulée (ZS) est mise en oeuvre par activation automatique du module (LC) de contrôle de charge, lorsque la puissance requise par un canal (CH) de transmission d'un paquet augmente au-delà d'un maximum autorisé, et consiste en une sélection (552) automatique de ce paquet comme paquet excessif puis un déclassement (65) des paramètres de transmission de ce paquet excessif sélectionné.

28. Procédé selon une des revendications 19 à 27, **caractérisé en ce que** l'étape de contrôle (54) de l'admissibilité de la transmission (T) du paquet (P) du terminal (2) mobile requérant consiste en l'utilisation, par le module (CAC) de contrôle d'admission, d'au moins un algorithme de contrôle d'admissibilité préalablement enregistré dans les moyens (11) de mémorisation du système (1) d'optimisation et comporte les étapes suivantes :
- définition (541) de l'ensemble (AS) actif de cellules disponibles pour la transmission (T) du paquet (P) du terminal (2) requérant, par mesure et classement d'une pluralité de serveurs (ER) de la zone simulée (ZS), dont le nombre dépend de la localisation et du type du terminal (2) requérant, en fonction de leur participation (Ec/lo) à la puissance totale des signaux échangés avec le terminal (2) requérant ;
- vérification (542) de la disponibilité de ressources, en canaux et en puissance, pour chacune des cellules ;
- définition de la puissance requise par les canaux de transmission du paquet (P) pour chacune des cellules et vérification (543) que cette puissance requise par chacune des cellules n'excède pas la puissance maximum du support (B) définie pour la transmission (T) du paquet (P) du terminal (2) requérant ;
- vérification (544) que le statut d'au moins une des cellules permet l'admission de transmissions (T) de données par un nouveau terminal mobile communicant.

29. Procédé selon la revendication 28, **caractérisé en ce que** l'utilisation, par le module (CAC) de contrôle d'admission, d'au moins un algorithme de contrôle d'admissibilité définissant les conditions nécessaires pour l'admission d'une nouvelle transmission (T) de données, résulte en une décision (545), en fonction du trafic, de l'admissibilité de la transmission (T) du paquet (P) du terminal (2) mobile requérant, cette décision (545) consistant en l'une des étapes suivantes :
- acceptation (61) de la transmission (T) du paquet (P) du terminal (2) requérant, lorsque les conditions nécessaires pour l'admission d'une nouvelle transmission (T) sont remplies, après sélection (58) d'un serveur (ER) pour la transmission (T) du paquet (P) et sélection (59) du support (B) à utiliser pour cette transmission (T) ;
- reconfiguration (64) par utilisation d'au moins un algorithme de reconfiguration de la transmission (T) de données lorsque les conditions nécessaires pour l'admission d'une nouvelle transmission (T) ne sont pas remplies et que les moyens (11) de mémorisation du système (1) d'optimisation stockent au moins un algorithme de reconfiguration, pour permettre une modification des données relatives au support (B), et augmenter les chances d'admission de la transmission (T) ;
- rejet (60) de la transmission (T) du paquet (P) du terminal (2) mobile requérant, lorsque les conditions nécessaires à l'admission ne sont pas remplies et que les moyens (11) de mémorisation du système (1) d'optimisation ne stockent pas d'algorithme de reconfiguration ou que le trafic au sein de la zone simulée (ZS) ne permet pas une reconfiguration (64) efficace de la transmission (T) du paquet (P).

30. Procédé selon la revendication 29, **caractérisé en ce que** l'étape de reconfiguration (64) par utilisation d'au moins un algorithme de reconfiguration de la transmission (T) du paquet (P), mise en oeuvre par le module (CAC) de contrôle d'admission lorsque les conditions nécessaires pour l'admission d'une nouvelle transmission,définies par l'algorithme de contrôle d'admissibilité, n'ont pas été remplies et que les moyens (11) de mémorisation du système (1) d'optimisation stockent au moins un algorithme de reconfiguration, résulte soit en l'acceptation (61) de la transmission (T) du paquet (P) par le serveur (ER) de l'ensemble actif (AS) possédant la meilleure participation (Ec/lo) à la puissance du signal, lorsque le paquet (P) utilise une technologie d'aiguillage par circuit, puis en une étape de contrôle (55) de charge par le module (LC) de contrôle de charge, soit en au moins une des étapes suivantes lorsque le paquet (P) utilise une technologie d'aiguillage (PS) par paquets :
- recherche (67) d'un support (B) pour lequel la puissance requise est compatible avec la gamme de puissance d'au moins un canal (CH) d'une des cellules de l'ensemble actif (AS), puis, le cas échéant, sélection (68) de ce support (B) et itération de l'étape suivante ou rejet (60) de la transmission (T) du paquet (P) ;
- vérification (69) de la disponibilité de la puissance requise par le support (B) sélectionné dans au moins une des cellules de l'ensemble actif (AS), puis, lorsque ces conditions sont remplies, acceptation (61) de la transmission (T) dans cette cellule disponible ou, lorsque la puissance requise par le support (B) n'est pas disponible, acceptation (61) de la transmission (T) du paquet (P) par le serveur (ER) de l'ensemble actif (AS) possédant la meilleure participation (Ec/Io) à la puissance du signal, puis itération de l'étape de contrôle (55) de charge par le module (LC) de contrôle de charge.

31. Procédé selon une des revendications 1 à 30, **caractérisé en ce qu'**il est mis en oeuvre par une application (102) de simulation et d'optimisation de ressources, exécutée sur les moyens (10) de traitement du système (1) d'optimisation de ressources et contrôlant les moyens (10) de traitement et l'interopérabilité du module (CT) de contrôle du trafic, du module (CAC) de contrôle d'admissibilité, du module (LC) de contrôle de charge et du module (CL) de contrôle d'exploitation des ressources et accédant aux moyens (11) de mémorisation du système (1) d'optimisation pour le chargement des données nécessaires aux différents modules, le procédé comportant une étape d'installation (47) de l'application (102) sur le système (1) d'optimisation par enregistrement, dans les moyens (11) de mémorisation du système (1) d'optimisation, de données permettant l'exécution de l'application (102) sur les moyens (10) de traitement du système (1) d'optimisation.

32. Procédé selon la revendication 31, **caractérisé en ce que** l'étape d'installation (47) de l'application (102) sur le système (1) d'optimisation comporte une étape d'implémentation (48) de l'application (102) d'optimisation au sein d'un environnement logiciel fourni par un outil (103) de planification de cellules exécuté sur des moyens de traitement d'au moins un serveur (ER) au sein de la zone de couverture du réseau (RT), par enregistrement, dans des moyens de mémorisation du serveur (ER), de données permettant l'exécution de l'application (102) d'optimisation de ressources au sein de l'outil (103) de planification du serveur (ER) qui constitue ainsi un système (1) d'optimisation.

33. Procédé selon une des revendications 1 à 32, **caractérisé en ce que** les étapes de définition (50) de la perturbation et de sélection (52) d'une zone simulée (ZS) sont accompagnées d'une étape de chargement dans une mémoire (101) de travail, de type mémoire vive ou à temps d'accès très court, du système (1) d'optimisation de ressources, d'au moins certaines des données stockées dans les moyens (11) de mémorisation du système (1) d'optimisation.

34. Système (1) de simulation et d'optimisation de l'exploitation des ressources disponibles dans une zone de couverture d'un réseau (RT) de téléphonie mobile consistant en un ensemble de zones d'influence, dites cellules, d'une pluralité d'émetteurs/récepteurs (ER), dits serveurs, dont l'exploitation des ressources dépend des transmissions (T) d'ensembles de données, dits paquets (P), requises par au moins un terminal (2) mobile communicant, dit requérant, présent dans leur zone d'influence, le système (1) étant **caractérisé en ce qu'**il comporte des moyens (10) de traitement comportant :
- un module (EM) gestionnaire d'évènements définissant une variation, dite perturbation, d'au moins une transmission (T) de paquet (P) requise au sein du réseau (RT), la perturbation étant définie à partir d'au moins une carte (CR) de répartition statistique stockée dans des moyens (11) de mémorisation du système (1) d'optimisation et comportant des données représentatives de transmissions (T) de paquets (P) de données d'une pluralité de terminaux mobiles communicants présents dans une zone géographique déterminée pendant une tranche horaire déterminée,
- un module (CL) de contrôle d'exploitation des ressources définissant une zone simulée (ZS) au sein de la carte (CR) de répartition en sélectionnant un ensemble de cellules comportant au moins la cellule dans laquelle la perturbation a lieu et utilisant un algorithme de parcours stocké dans les moyens (11) de mémorisation du système (1), pour définir un chemin de parcours (CP) de la zone simulée (ZS) et optimiser successivement les ressources des serveurs (ER) couvrant les cellules successives du chemin de parcours (CP).

35. Système (1) selon la revendication 34, **caractérisé en ce que** au moins une carte (CR) de répartition statistique stockée dans des moyens (11) de mémorisation comporte des données représentatives du trafic et de la localisation des serveurs (ER) dans la zone de couverture du réseau (RT), ces données représentatives du trafic correspondant à des mesures quantitatives et qualitatives de la localisation d'une pluralité de terminaux mobiles communicants et de serveurs opérant dans la zone de couverture du réseau (RT) et des transmissions (T) de paquets (P) de données effectuées au cours de tranches horaires choisies pour leur significativité statistique.

36. Système (1) selon la revendication 34, **caractérisé en ce que** les moyens (11) de mémorisation stockent des données représentatives d'au moins une densité prédéterminée de terminaux mobiles communicants dans la zone de couverture du réseau (RT), d'au moins une loi de distribution aléatoire de ces terminaux mobiles communicants et d'au moins une loi d'assignation aléatoire de transmissions (T) de paquets (P) de données à ces terminaux, l'ensemble de ces données permettant au module (EM) gestionnaire d'évènements de générer au moins une carte (CR) de répartition statistique comportant des données représentatives du trafic et de la localisation des serveurs (ER) dans la zone de couverture du réseau (RT), les données représentatives du trafic correspondant, d'une part, à la localisation d'une pluralité de terminaux mobiles communicants distribués aléatoirement dans la zone de couverture du réseau (RT) selon la densité prédéterminée et, d'autre part, aux transmissions (T) de paquets (P) de données requises par ces terminaux assignées aléatoirement aux différents terminaux présents dans le réseau (RT).

37. Système (1) selon une des revendications 34 à 36, **caractérisé en ce que** les moyens (11) de mémorisation du système (1) d'optimisation stockent au moins un algorithme de parcours permettant au module (CL) de contrôle d'exploitation de définir un chemin de parcours (CP) des cellules dans un ordre croissant en fonction de leur distance par rapport à la première cellule sélectionnée, selon au moins un des principes suivants :
- sélection d'une cellule quelconque de la zone simulée (ZS) puis itérations d'une sélection d'une cellule adjacente à la cellule sélectionnée précédemment, jusqu'à ce que toutes les cellules de la zone simulée (ZS) aient été successivement sélectionnées,
- définition de cercles concentriques centrés autour de la cellule dans laquelle a lieu la perturbation et sélections successives des cellules de la zone simulée (ZS) par lesquelles passent ces cercles concentriques,
- création de données représentatives d'une grille de découpage de la zone simulée (ZS) en divisions (D) comportant chacune un index obtenu à partir des coordonnées des cellules et permettant de localiser chacune des divisions et de les classer dans un ordre croissant en fonction de leur distance par rapport à une division centrale, puis définition de cercles concentriques centrés autour de la cellule dans laquelle a lieu la perturbation et définition de vecteurs indiquant le trajet à parcourir d'une division (D) à l'autre au sein de la zone simulée (ZS), pour permettre des sélections successives des divisions (D) de la zone simulée (ZS) par lesquelles passent ces cercles concentriques et des sélections successives des cellules contenues dans chacune de ces divisions (D).

38. Système (1) selon une des revendications 34 à 37, **caractérisé en ce que** l'algorithme de parcours stocké dans les moyens (11) de mémorisation du système (1) d'optimisation et la grille de découpage de la zone simulée (ZS) en divisions (D), comportant des données représentatives des coordonnées de la division, permettent au module (CL) de contrôle d'exploitation de déterminer la localisation des cellules ainsi que des divisions (D) et cellules voisines et de créer, pour chaque cellule de la zone simulée (ZS), des données représentatives des cellules voisines dans la zone simulée (ZS) et de données représentatives d'un marqueur indiquant les cellules déjà parcourues pendant le parcours de la zone simulée par le module (CL) de contrôle d'exploitation, de façon à définir un chemin de parcours (CP) de chacune des cellules les unes après les autres.

39. Système (1) selon une des revendications 34 à 38, **caractérisé en ce que** l'algorithme de parcours stocké dans les moyens (11) de mémorisation du système (1) d'optimisation permet au module (CL) de contrôle d'exploitation de déterminer un chemin de parcours aléatoire des cellules au sein d'une division (D).

40. Système (1) selon une des revendications 34 à 39, **caractérisé en ce que** le module (EM) gestionnaire d'évènements comporte au moins un type de moyens de sélection parmi les suivants :
- des moyens de sélection aléatoire et automatique d'un terminal (2) mobile communicant dans une carte (CR) de répartition extraite des moyens (11) de mémorisation,
- des moyens de sélection déterministe d'un terminal (2) mobile communicant sélectionné en fonction d'informations saisies et enregistrées par un utilisateur système (1) d'optimisation de ressources, grâce à des moyens interactifs (12) entre l'utilisateur et le système (1) d'optimisation de ressources,
- des moyens de sélection opérationnelle d'un terminal (2) mobile communicant localisé automatiquement dans la zone de couverture d'un réseau (RT) de téléphonie mobile opérationnel.

41. Système selon une des revendications 34 à 39, **caractérisé en ce que** le module (EM) gestionnaire d'évènements comporte au moins un des modules suivantes :
- un module (TE) de contrôle des évènements pour définir au moins des requêtes de nouvelles transmissions (T), des fins de transmission (T) et des expirations de délais de transmission (T),
- un module (MS) de simulation de mobilité simulant la mobilité du terminal (2) mobile communicant responsable de la perturbation,
- un module (SP) planificateur de paquets gérant des changements de transmissions (T) de paquets (P) en cours.

42. Système selon une des revendications 34 à 41, **caractérisé en ce que** les moyens (10) de traitement comportent un module de contrôle d'admissibilité des appels (CAC) comportant des moyens de vérification de la puissance et des canaux disponibles dans la zone simulée (ZS) pour définir un ensemble (AS), dit ensemble actif, de cellules disponibles au sein de la zone simulée (ZS) et décider, en fonction du trafic, de l'admissibilité de la transmission (T) du paquet (P) du terminal (2) requérant, grâce à au moins une voie de transmission, dite support (B), sur au moins un canal (CH) d'au moins un serveur (ER) couvrant une des cellules de l'ensemble actif (AS).

43. Système selon une des revendications 34 à 42, **caractérisé en ce que** les moyens (10) de traitement comportent un module (CT) de contrôle du trafic entre les serveurs (ER) de la zone simulée (ZS) et les terminaux mobiles communicants présents dans la zone simulée (ZS), définissant, pour chacune des transmissions (T) en cours, des sessions de transmission (T) de paquets, des supports (B) et des canaux (CH) de transmission.

44. Système selon une des revendications 34 à 43, **caractérisé en ce que** le module (CL) de contrôle d'exploitation comporte des moyens de vérification de la puissance utilisée dans chacune des cellules constituant la zone simulée (ZS) et comporte des moyens d'ajustement de la puissance d'au moins un serveur (ER) couvrant au moins une cellule de la zone simulée (ZS).

45. Système selon une des revendications 34 à 44, **caractérisé en ce que** les moyens (10) de traitement comportent un module (LC) de contrôle de charge activé lors d'une utilisation excessive des ressources d'au moins un serveur (ER) de la zone simulée (ZS) et accédant aux moyens (11) de mémorisation du système pour en extraire au moins un algorithme de contrôle de charge, contrôler la charge de chacune des cellules de la zone simulée (ZS) et comportant des moyens de décision influant sur la transmission (T) des paquets par les serveurs (ER) de la zone simulée (ZS).

46. Système selon une des revendications 34 à 45, **caractérisé en ce qu'**il comporte une mémoire (101) de travail, de type mémoire vive ou à temps d'accès très court, dans laquelle sont chargées, à partir des moyens (11) de mémorisation du système (1), au moins certaines données parmi au moins les données représentatives des cartes (CR) de répartition et des algorithmes de parcours.

47. Système selon une des revendications 34 à 44, **caractérisé en ce que** les moyens (11) de mémorisation du système (1) stockent des données permettant l'exécution d'une application (102) d'optimisation de ressources sur les moyens (10) de traitement du système (1) d'optimisation, cette application (102) contrôlant les moyens (10) de traitement et l'interopérabilité du module (CT) de contrôle du trafic, du module (CAC) de contrôle d'admission des appels, du module (CL) du contrôle d'exploitation et du module (LC) du contrôle de charge.

48. Système selon la revendication 47, **caractérisé en ce que** l'application (102) est implémentée au sein d'un environnement logiciel fourni par un outil (103) de planification de cellule exécuté sur les moyens (11) de traitement du système (1) d'optimisation de ressources.

49. Système selon la revendication 48, **caractérisé en ce qu'**il est implémenté dans au moins un serveur (ER) couvrant une cellule de la zone de couverture du réseau (RT), de façon à optimiser en temps réel, les ressources du serveur (ER) et des serveurs voisins dans la zone de couverture du réseau (RT), ce serveur (ER) constituant ainsi un système (1) d'optimisation des ressources du réseau (RT).
